# EUROPÄISCHE PATENTSCHRIFT

(11) **EP 1 381 328 B1**
(45) Veröffentlichungstag und Bekanntmachung des Hinweises auf die Patenterteilung: **14.05.2008**
(21) Anmeldenummer: 02719596.5
(22) Anmeldetag: 29.04.2002
(51) Int. Cl.: A61C 8/00

(54) **ANORDNUNG FÜR DAS HANDLING EINES IMPLANTATS**
ASSEMBLY FOR HANDLING AN IMPLANT
ENSEMBLE PERMETTANT DE MANIPULER UN IMPLANT

(30) Priorität: 27.04.2001 EP 01810419
(43) Veröffentlichungstag der Anmeldung: 21.01.2004
(73) Patentinhaber: Straumann Holding AG, 4437 Waldenburg (CH)
(72) Erfinder: VOGT, Martin, CH-4450 Sissach (CH); SCHÜRCH, Hans, CH-4425 Titterten (CH)
(74) Vertreter: Modiano, Micaela Nadia
(86) Internationale Anmeldenummer: PCT/CH2002/000235
(87) Internationale Veröffentlichungsnummer: WO 2002/087461

(56) Entgegenhaltungen:
- EP-B- 0 879 024
- WO-A-98/55039
- DE-A- 19 731 673
- US-A- 5 582 299

## Beschreibung

### Anwendungsgebiet der Erfindung

Die vorliegende Erfindung betrifft eine Anordnung für das Handling eines Implantats, das am Implantatkopf eine axial austretende Bohrung mit einer nicht-rotationssymmetrischen Innenkontur, vorzugsweise einen Innenvielkant, aufweist. Innerhalb der Axialbohrung kann ein Innengewindeabschnitt angeordnet sein. Die Mündung der Axialbohrung wird von einer Implantatschulter umgeben, die den oberen Abschluss des Implantats bildet. Derartige Implantate werden z.B. im Dentalbereich eingesetzt und sind dazu bestimmt, in eine im Kieferknochen vorbereitete Aufnahmebohrung eingesetzt zu werden. Schraubenimplantate werden in eine im Knochen vorbereitete Innengewindebohrung eingedreht oder besitzen ein selbstschneidendes Aussengewinde, das sich beim Eindrehen in ein präpariertes Sackloch das Innengewinde selbst erzeugt. Zylinderimplantate hingegen sind äusserlich gewindelos und werden in ein im Knochen vorbereitetes Sackloch eingedrückt. Die hiesige Erfindung bezieht sich vorrangig auf enossale Dentalimplantate in Schraubenform.

Für den Transfer zum Implantatbett, sowie zum Eindrehen bei Schraubenimplantaten, gehört ein Adapter zu der Anordnung, dessen unterer Schaft komplementär in der nicht-rotationssymmetrischen Innenkontur im Implantatkopf steckt. Der obere Fortsatz des Adapters weist eine nicht-rotationssymmetrische Kontur, vorzugsweise einen Aussenvielkant auf, um daran ein Eindrehinstrument anzusetzen. Zur Anordnung gehört ferner eine über die Implantatschulter aufrastbare Kappe. Zum Transport und zur Aufbewahrung des Implantats ist, in Erweiterung der Anordnung, ein Behältnis vorgesehen. Während der chirurgischen Operation lässt sich das Implantat aus dem Behältnis, mit dem am Fortsatz des Adapters angesetzten Eindrehinstrument, unter sterilen Bedingungen entnehmen und mit diesem Instrument dann in die Aufnahmebohrung im Knochen einbringen.

### Stand der Technik

Für das Handling des vorgenannten Implantattyps sind verschiedene Adapter bekannt; zur Übertragung der geometrischen Kontur im Umfeld des im Patienten eingesetzten Implantats existieren unterschiedliche Abdruckkappen und für die Aufbewahrung solcher Implantate sind vielfältig gestaltete Ampullen auf dem Markt.

In der WO 98/26726 wird eine Adapterhülse vorgeschlagen, die sich am Rand einer Durchgangsbohrung in einer Zwischenwand innerhalb der Sterilampulle abstützt. Hauptsächlich, neben der Halterung des Implantats in der Sterilampulle, ist die Adapterhülse zur zeitweiligen Verbindung zwischen dem Implantat und einem Manipulierorgan vorgesehen. Das erste Ende der Adapterhülse ist auf einen Steckansatz des positionierten Implantats wieder lösbar aufgesteckt; an das zweite Ende der Adapterhülse lässt sich die Spitze des Manipulierorgans wieder lösbar ansetzen. Mit dem Ansetzen des Manipulierorgans an die mit dem Implantat bereits verbundene Adapterhülse hat man das Implantat ergriffen. Somit entsteht eine zweifache Steckverbindung zwischen Implantat, Adapterhülse und Manipulierorgan, mit der sich das Implantat quasi berührungslos transferieren lässt. Beim Abziehen des Manipulierorgans vom Implantat löst sich nur die Steckverbindung zwischen dem Implantat und dem Manipulierorgan. Diese Adapterhülse stellt ein weiteres Bauteil dar und ist nicht zur Übertragung des beim Eindrehen des Implantats mit einem Eindrehinstrument erzeugten Drehmoments geeignet.

Aus der US 5,538,428 ist bekannt, zwischen dem Deckel einer Ampulle und dem darin gelagerten Implantat einen Adapter anzuordnen, welcher aus einem Hülsenteil und einer durch das Hülsenteil hindurch ragenden, drehbaren Schraube besteht. Nach unten, zur Implantatschulter gewandt, besitzt das Hülsenteil einen Innenvielkant zur komplementären Aufnahme des die Implantatschulter nach oben überragenden Aussenvielkants. Im wesentlichen ist das Hülsenteil äusserlich als ein aufwärts gerichtetes Aussenvielkant-Segment gestaltet. Zuunterst weist die Schraube einen Aussengewindeabschnitt auf, der zum Eingriff in die im Implantat vorhandene Innengewindebohrung bestimmt ist. Die Schraube besitzt einen das Hülsenteil überragenden Fortsatz mit einer nicht-rotationssymmetrischen Kontur zum Ansetzen eines Eindrehinstruments, so dass sich über den, mit dem Implantat verbundenen Adapter, die drehende Einschraubbewegung übertragen lässt. Um den Adapter vom Implantatkopf abzunehmen, muss man den Aussengewindeabschnitt der Schraube aus der Innengewindebohrung im Implantat herausdrehen. Damit ist diese Konstruktion nur bei Implantaten mit einem Innengewinde und einem die Implantatschulter überragenden Aussenvielkant zu verwenden. Überdies verkompliziert das nötige Abschrauben des Adapters vom Implantat das operative Prozedere.

In der WO 98/55039 wird ein Adapter der gleichen Gattung beschrieben. Wiederum sind ein Hülsenteil und eine durch das Hülsenteil hindurch ragende, drehbare Schraube vorgesehen. Nach unten, zur Implantatschulter gewandt, besitzt das Hülsenteil eine Gegenschulter zur komplementären Aufnahme der Implantatschulter und Reibschluss mit dieser. Über der Schulterpartie ist das Hülsenteil als Aussenvielkant-Segment beschaffen. Zuunterst besitzt die Schraube einen Aussengewindeabschnitt zum Eingriff in die im Implantat vorhandene Innengewindebohrung. Die Schraube weist einen das Hülsenteil überragenden Fortsatz mit einem Aussenvielkant zum Ansetzen eines Eindrehinstruments auf. Im wesentlichen über die Reibschlussverbindung zwischen der Gegenschulter im Hülsenteil des Adapters und der Implantatschulter wird das mit dem angesetzten Eindrehinstrument ausgeübte Drehmoment zum Eindrehen des Implantats in den Patientenknochen übertragen. Zum Lösen des Adapters vom Implantatkopf muss man das Aussenvielkant-Segment am Hülsenteil mit einem Konterschlüssel fassen und zugleich, mit dem nun entgegengesetzt rotierenden Eindrehinstrument, den Aussengewindeabschnitt der Schraube mit dem Innengewinde im Implantatkopf ausser Eingriff bringen. Bei Dentalimplantaten - im engen Raum eines Patientenmundes mit vorhandenen Nachbarzähnen -, erfordern diese Arbeitsabläufe mit zwei Instrumenten hohe Fertigkeiten des operierenden Chirurgen, sind aber stets diffizil und zeitaufwendig. Bei wechselnden Positionen der eingesetzten Implantate, insbesondere im Ober- bzw. Unterkiefer, kann es problematisch sein, auf Anhieb die lösende Drehrichtung beim Abnehmen des Adapters zu erkennen. Schliesslich ist diese Konstruktion eines Adapters ebenfalls nur für Implantate mit einem Innengewinde zu verwenden.

Die in der WO 98/55039 beschriebene Ampulle zum Transport, zur Aufbewahrung und zur Bereitstellung eines Implantats unmittelbar vor dem Einsetzen in den Knochen, hat sich als äusserst vorteilhaft erwiesen. Aus diesem Grunde kann diese Ampulle auch im Zusammenhang mit der hiesigen Erfindung wieder Verwendung finden. Die Ampulle besitzt einen äusseren Mantel und lässt sich in eine Aussenkapsel einsetzen. Eine Fixierpartie in der Ampulle dient zum Einhängen des Adapters, welcher koaxial mit dem Implantat verbunden ist und es auf diese Weise hält. Durch eine seitliche, grossflächige Aussparung im Mantel ist das in der Ampulle gehalterte Implantat mittels eines am Adapter angesetzten Instruments berührungslos entnehmbar.

Ein weiteres Problemfeld stellt die Erfassung der geometrischen Kontur - als Abdrucknahme - im Umfeld des im Patienten eingesetzten Implantats dar. Der genommene Abdruck dient in der Dentalimplantologie der Übertragung auf ein Meistermodell, auf dem die passgerechte Suprastruktur angefertigt wird, welche man auf das eingesetzte Implantat aufsetzt. Hierbei ist aus bekannten Gründen höchste Präzision gefordert.

In der EP 0 879 024 B1 wird eine Abdruckkappe zur Übertragung eines aus einer menschlichen Gewebestruktur austretenden Abschlusses eines in den Humankörper eingesetzten Implantats, inklusive möglicher Aufbauten auf ein Meistermodell beschrieben. Das nach aussen gerichtete Implantatende weist an seiner Aussenseite eine hinterschnittene Kontur auf, während die Abdruckkappe eine zur hinterschnittenen Kontur komplementäre, darin eingreifende Geometrie besitzt. Dies ist ein Schnappelement in Form einer zirkulären Lippe oder einzelner Greiforgane. Die hinterschnittene Kontur wird z.B. durch eine zum Implantatlager hin sich trompetenförmig verjüngende Implantatgeometrie gebildet. Der trompetenförmige Implantatabschluss hat angrenzend an den Bereich des grössten Durchmessers eine abgewinkelte, d.h. konische Implantatschulter, auf welcher sich die an der Abdruckkappe vorgesehene Kappenschulter abstützt. Mit dieser Abdruckkappe wurde gegenüber dem zuvor bekannten Stand der Technik eine markante Vereinfachung des Verfahrens der Abdrucknahme bis zur Herstellung des Meistermodells erzielt. Gleichzeitig gelang damit auch eine weitere Verbesserung in der Präzision. Teils problematisch ist jedoch das exakte Aufsetzen der Abdruckkappe in engen Positionen, wie z.B. im Patientenmund bei gesetzten Dentalimplantaten, mit auf die Implantatschulter ragendem Zahnfleisch und während der Operation freigesetztem Blut.

### Aufaabe der Erfindung

Angesichts der oben genannten Nachteile der bis dato bekannten Adapter zum Ergreifen und Halten von Implantaten sowie zur Abdrucknahme liegt der Erfindung das Problem zugrunde, eine vervollkommente Anordnung für diese Zwecke zu schaffen. Hierbei gilt es, die Vorzüge des Prinzips einer auf die Implantatschulter aufrastbaren Abdruckkappe gemäss der EP 0 879 024 B1 weiterhin zu nutzen. Die Anordnung soll es erlauben, ein mit dem Adapter verbundenes Implantat in einem Behältnis so unter sterilen Bedingungen zu lagern, dass sich ein Eindrehinstrument zur Entnahme der Anordnung aus dem Behältnis an den Adapter setzen lässt. Als Behältnis soll die Ampulle des konstruktiven Prinzips, wie in der WO 98/55039 offenbart, verwendet werden können, wobei ein alternativ einsetzbares Behältnis mit weiteren vorteilhaften Fertigungs- und Gebrauchswerteigenschaften vorzuschlagen ist.

Der Adapter soll sich effizient herstellen und vielfach nutzen lassen. Die Verbindung des Adapters mit dem Implantat muss sicheren Halt gewährleisten, d.h. in der vorbereitenden Phase der chirurgischen Operation und während der Operation müssen die zur Applikation vorgesehenen Implantate stets sicher geführt werden können, dürfen sich keinesfalls unkontrolliert lösen, und die Sterilitätsanforderungen müssen erfüllt sein. Der Adapter soll die Entnahme des lmplantats aus dem Behältnis mit dem angesetzten Eindrehinstrument und das Einsetzen des Implantats in den Knochen wesentlich vereinfachen. Schliesslich soll sich der Adapter vom Implantat aber unproblematisch wieder lösen lassen.

### Übersicht über die Erfindung

Die Anordnung für das Handling eines in Knochen einzusetzenden Implantats besteht aus einer auf das Implantat lösbar aufsteckbaren Übertragungskappe und einem am Implantat eingreifenden Adapter. Das Implantat besitzt einen Implantatkopf und eine sich vom Implantatkopf erstreckende Wurzelpartie. Der Implantatkopf weist eine intern gelegene, nicht-rotationssymmetrische Innenkontur oder alternativ eine derartige Aussenkontur, eine äussere Implantatschulter und eine unterhalb der Implantatschulter gelegene Schulterkante auf. Unterhalb der Schulterkante besitzt das Implantat eine Hinterschneidung. Die Übertragungskappe weist eine zur Implantatschulter komplementäre Kontaktfläche und eine die Schulterkante unterfassende, in die Hinterschneidung eingreifende elastische Lippe auf. Der Adapter hat eine Mitnehmersektion, die zum formschlüssigen Eingriff mit der Innenkontur bzw. Aussenkontur am Implantat bestimmt ist. Ferner hat der Adapter einen Steckansatz, der zum Ansetzen eines Instruments bestimmt ist. Die Übertragungskappe ist mit einem Axialdurchgang zum Durchtritt des Adapters zum Implantat versehen. Bei auf das Implantat aufgesteckter Übertragungskappe und eingestecktem Adapter greift dessen Mitnehmersektion an der Innenkontur bzw. an der alternativ vorhandenen Aussenkontur formschlüssig an. Der Adapter liegt im Axialdurchgang, und der Steckansatz des Adapters ragt aus der Übertragungskappe heraus.

Der durch den Axialdurchgang durchtretende Adapter und die Übertragungskappe sind lösbar miteinander verbunden. Die Lösekraft für das Trennen der Verbindung zwischen Implantat und Übertragungskappe ist grösser bemessen, als die Lösekraft für das Trennen der Verbindung zwischen Übertragungskappe und Adapter.

Die nachfolgenden Merkmale stellen vorteilhafte Ausführungsformen der Erfindung dar.

Zur lösbaren Verbindung zwischen Übertragungskappe und Adapter weist die Übertragungskappe einen inneren Abschnitt und der Adapter eine Haltesektion auf, die miteinander eine Reibschlussverbindung eingehen. Alternativ besitzt die Übertragungskappe eine elastisch verformbare Kontur und der Adapter eine dazu komplementäre Gegenkontur, die miteinander eine kraftschlüssige Verbindung eingehen. Schliesslich können der innere Abschnitt und die Haltesektion für die Reibschlussverbindung sowie die Kontur und die Gegenkontur für die Kraftschlussverbindung zusammen vorhanden sein. Der innere Abschnitt an der Übertragungskappe ist eine zylindrische Innenwandung. Die Haltesektion am Adapter ist ein Zylinderabschnitt. Die verformbare Kontur an der Übertragungskappe ist eine den Axialdurchgang verengende Wulst. Die Gegenkontur am Adapter ist eine Radialnut, in welche die Wulst einrastet.

Die Übertragungskappe ist einstückig und setzt sich aus einem topfförmigen Hohlkörper und einem sich daran angeordneten Retentionsflügel zusammen. Der Axialdurchgang mündet einerseits an der Unterseite des Hohlkörpers und andererseits auf der Oberseite des Retentionsflügels. Die elastische Lippe engt den Axialdurchgang ein und ist zuunterst am Hohlkörper vorgesehen ist. Der Hohlkörper weist die innere Kontaktfläche als auf die Implantatschulter passenden Konusabschnitt auf. Zwischen Hohlkörper und Retentionsflügel ist eine Nut zum Abtrennen des Retentionsflügels vorhanden, der sich im wesentlichen waagerecht, also senkrecht zum Axialdurchgang stehend, erstreckt. Auf der Oberseite des Retentionsflügels ist der mündende Axialdurchgang von einem Kragen umgeben, an dem eine nach innen gewandte Wulst ausgebildet ist. Zur Erhöhung der Elastizität des Kragens können darin Einschnitte vorgesehen sein.

Die nicht-rotationssymmetrische Innenkontur im Implantat ist ein Innenvielkant, z.B. ein Achtkant. Oder die alternativ vorgesehene Aussenkontur am Implantat ist ein Aussenvielkant, z.B. ein Achtkant. Die Mitnehmersektion am Adapter - bei vorhandener Innenkontur im Implantat - ist ein Aussenvielkant, z.B. ein Achtkant. Oder die Mitnehmersektion am Adapter - bei alternativ vorhandener Aussenkontur am Implantat - ist ein Innenvielkant, z.B. ein Achtkant. Der Steckansatz am Adapter ist ein Aussenvielkant. Am Adapter schliesst sich an die Mitnehmersektion die Haltesektion an. Zwischen Haltesektion und Steckansatz liegt eine Zwischensektion, welche einen ersten und einen zweiten Bund aufweist, zwischen denen ein im Durchmesser reduzierter Abschnitt liegt. Der erste Bund hat die Radialnut und zwischen dem Steckansatz und dem zweiten Bund ist eine Ringnut zur Aufnahme eines Halteringes vorhanden.

Das Implantat verjüngt sich unterhalb der Schulterkante zur Wurzelpartie hin trompetenförmig, wodurch eine Hinterschneidung entsteht. Die Implantatschulter hat eine Neigung im Bereich von 30°. Die Wurzelpartie ist mit einem vorzugsweise selbst-schneidenden Aussengewinde versehen. Bei vorhandener Innenkontur am Implantat oder bei alternativ vorhandener Aussenkontur am Implantat kann innerhalb eines Sacklochs, ein Innengewindeabschnitt angeordnet sein.

Die Kombination aus Implantat, auf das Implantat aufgesteckter Übertragungskappe und durch die Übertragungskappe durchgestecktem Adapter ist, für die operative Applikation in einem sterilen Behältnis aus einer fixierten Lage lösbar, angeordnet. Hierbei ist der Steckansatz für das Ergreifen mittels eines Instruments - zumeist ein Eindrehinstrument, mit eventuell zuvor an den Steckansatz angestecktem Kupplungsteil - zugänglich positioniert. Das Behältnis für die Kombination ist eine in eine Aussenkapsel einsetzbare Ampulle mit einem äusseren Mantel, einer seitlichen, grossflächigen Aussparung im Mantel, durch welche das in der Ampulle gehalterte Implantat herausnehmbar ist, und einer Haltepartie mit einer lateral offenen Einbuchtung, die mit der Aussparung in die gleiche Richtung weist. Der die Übertragungskappe und das Implantat tragende Adapter ist mit seiner Zwischensektion in die Einbuchtung lösbar eingerastet, wodurch das vom Adapter getragene Implantat berührungslos in der Ampulle gelagert ist.

Das Behältnis für die Kombination kann alternativ eine Blisterpackung mit einer tief gezogenen Bodenform sein, die eine mehrgliedrige Vertiefung aufweist, welche sich weiträumig über die Aussenkontur der Anordnung ausdehnt. Zur Vertiefung gehören eine Instrumenten-Aussparung, für den dort hinein ragenden Steckansatz des Adapters, sowie eine der Instrumenten-Aussparung gegenüber liegende Implantat-Aussparung, in die das Implantat mit der aufgesteckten Übertragungskappe hineinragt.

Zwischen der Instrumenten-Aussparung und der Implantat-Aussparung gibt es zwei querlaufende, zueinander fluchtende Führungsschlitze für die leicht klemmende Aufnahme des Retentionsflügels der Übertragungskappe, wodurch das von der Übertragungskappe gestützte Implantat berührungslos in der Bodenform gelagert ist. Die Bodenform ist mit einem Überzug überdeckt, und innerhalb der Bodenform können weitere Vertiefungen, z.B. für die Einlagerung einer Einheilschraube, vorhanden sein.

Beim Abziehen einer Abdruckform vom Implantat, nach genommenem Abdruck, löst sich die Übertragungskappe und verbleibt in der Abdruckform. In die in der Abdruckform verbliebenen Abdruckkappe ist ein Manipulierimplantat, mit einer analogen Schulterkante und Hinterschneidung, rastend einsteckbar. Beim Trennen des mit Modellmasse aufgefüllten Abdrucks entsteht ein Meistermodell mit darin eingebettetem Manipulierimplantat. Hierbei verbleibt die vorzugsweise aus ausbrennbarem Kunststoff bestehende Übertragungskappe wieder in der Abdruckform.

Dank der erfindungsgemässen Anordnung vereinfacht sich das Prozedere beim Einsetzen der Implantate sowie bei der Abdrucknahme. Das benötigte Instrumentarium verringert sich; so erübrigt sich eine Hülse am Adapter mit dem Aussenvielkant als Kontermutter, wodurch das bis anhin nötige Instrument - ein Halteschlüssel - nicht mehr erforderlich ist. Es entfällt damit insbesondere der diffizile Arbeitsschritt des Entkonterns zwischen Adapter und Implantat nach dem Einsetzen des Implantats in den Körper des Patienten. Durch die beim Implantieren bereits auf dem Implantat sitzende Abdruckkappe entfällt auch dieser teils problematische Arbeitsschritt. Hierdurch verringert sich die Belastung auf das eingesetzte Implantat insgesamt in zweifacher Hinsicht, denn es erübrigen sich sowohl das Entkontern des Adapters als auch das Aufrasten der Abdruckkappe, was an schwieriger zugänglichen Positionen mitunter recht heikel ist. Im Ergebnis wird die Konstruktion des Adapters unaufwendiger, es verringert sich das bisher nötige Instrumentarium und das Prozedere des Implantierens sowie der Abdrucknahme vereinfachen sich deutlich. Die Belastung auf das neu gesetzte Implantat wird erheblich reduziert. Schliesslich kommen weiterhin alle Vorzüge, in Kombination mit der bisher bewährten Ampulle zur Geltung. Die als alternatives Behältnis vorgeschlagene Blisterpackung verbessert darüber hinaus die Effizienz der Verpackung der Anordnung.

### Kurzbeschreibung der beigefügten Zeichnungen

Mit Bezug auf die beiliegenden Zeichnungen erfolgt nachstehend die detaillierte Beschreibung eines Ausführungsbeispiels der erfindungsgemässen Anordnung. Im Interesse einer kompletten Darstellung wird dabei auch die bereits bekannte Ampulle zur Aufbewahrung des Implantats, soweit für die Erläuterung nötig, beschrieben. Am Beschreibungsende werden mögliche Modifikationen erwähnt. Es zeigen:

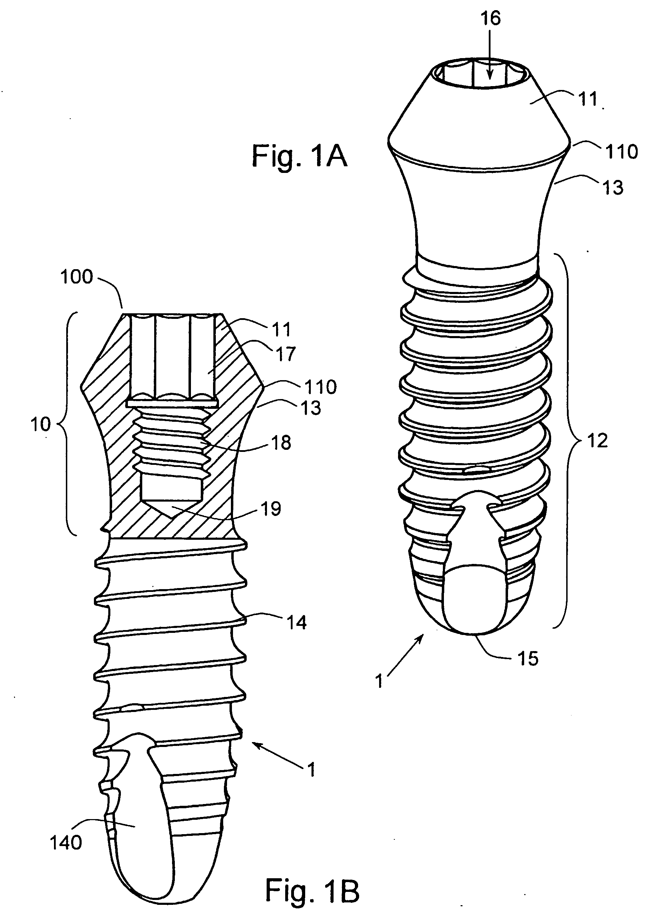

- Figur 1A:: ein weitgehend bekanntes Implantat in Form einer Vollschraube als Perspektivansicht;
- Figur 1B:: das Implantat gemäss Figur 1A als Teilschnitt;
- Figur 2A:: eine erfindungsgemässe Übertragungskappe als Perspektivansicht;
- Figur 2B:: die Übertragungskappe gemäss Figur 2A, in anderer Perspektive, als Teilschnitt;
- Figur 2C:: die Darstellung gemäss Figur 2B, mit einem Kragen über dem Retentionsflügel;
- Figur 3A:: ein erfindungsgemässer Adapter in Perspektivansicht;
- Figur 3B:: der Adapter gemäss Figur 3A mit aufgesetztem O-Ring;
- Figur 3C:: der Adapter gemäss Figur 3A, in anderer Perspektive, mit zusätzlicher Rastnut zum Eingriff der Rastelemente des Kragens der Übertragungskappe gemäss Figur 2C;

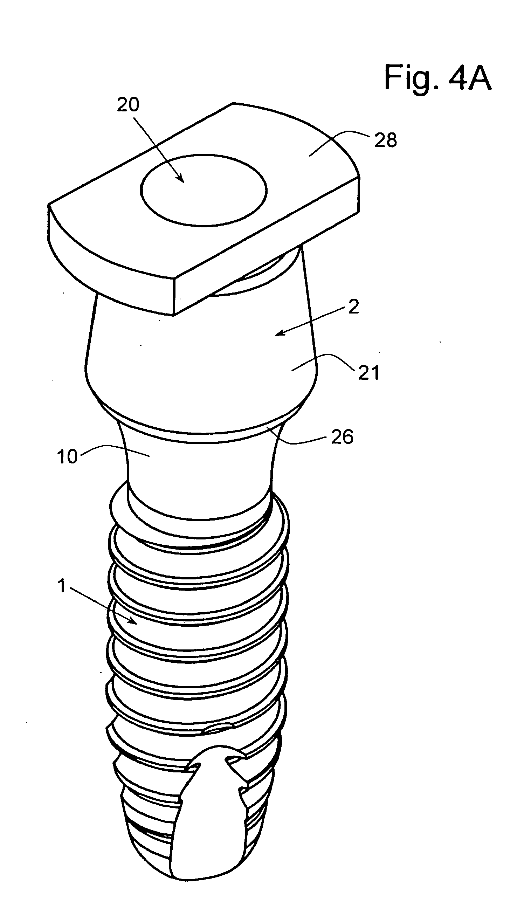

- Figur 4A:: das Implantat gemäss Figur 1A mit aufgesetzter Übertragungskappe gemäss Figur 2A als Perspektivansicht;

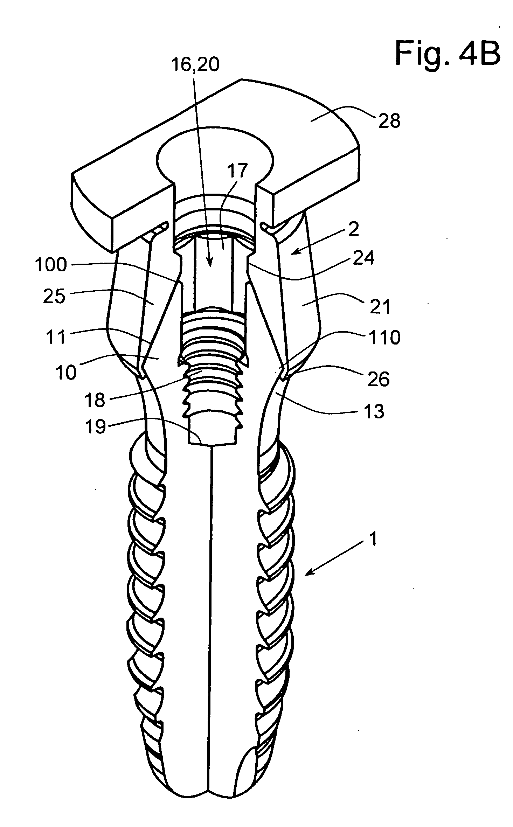

- Figur 4B:: die Darstellung gemäss Figur 4A als Teilschnitt;
- Figur 5A:: die Kombination aus Implantat und Übertragungskappe gemäss Figur 4A mit eingesetztem Adapter gemäss Figur 3A als Perspektivansicht;
- Figur 5B:: die Darstellung gemäss Figur 5A als Teilschnitt;
- Figur 5C:: die Kombination gemäss Figur 5A, in verkleinerter, anderer Perspektive mit der modifizierten Übertragungskappe gemäss Figur 2C, als Teilschnitt;
- Figur 6A:: eine Kombination aus einem Implantat mit einem Aussenvielkant, einer modifizierten Übertragungskappe, mit einem eingesetzten, modifizierten Adapter, als Teilschnitt in Perspektivansicht;
- Figur 6B:: die Kombination gemäss Figur 6A, im vertikalen Teilschnitt

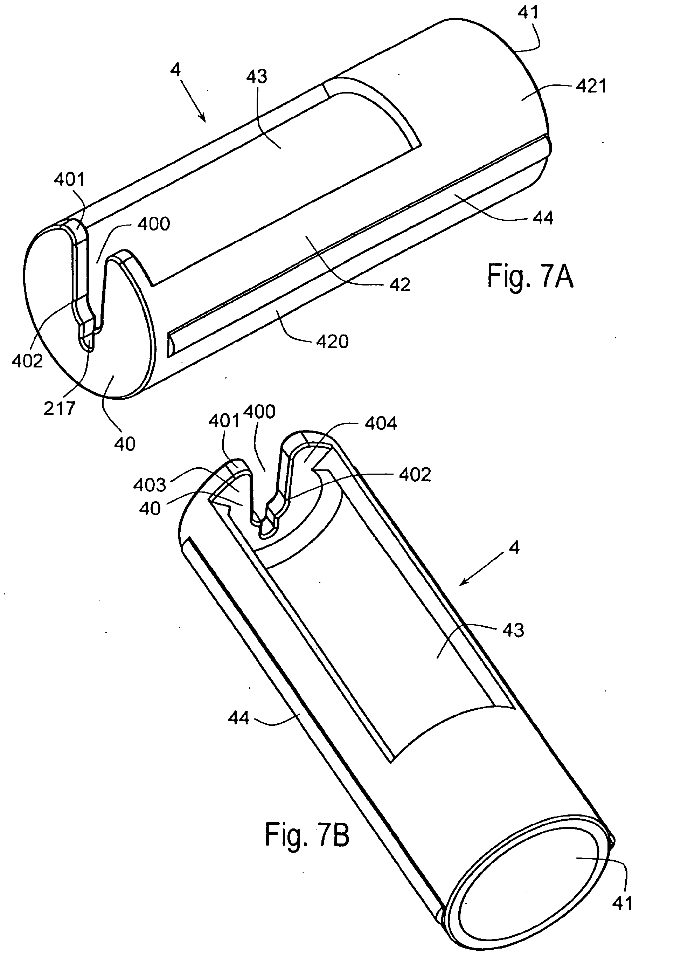

- Figur 7A:: eine an sich bekannte Ampulle in der Perspektivansicht auf die Aussenseite der Fixierpartie;
- Figur 7B:: die Ampulle gemäss Figur 7A in der Perspektivansicht auf die Innenseite der Fixierpartie;

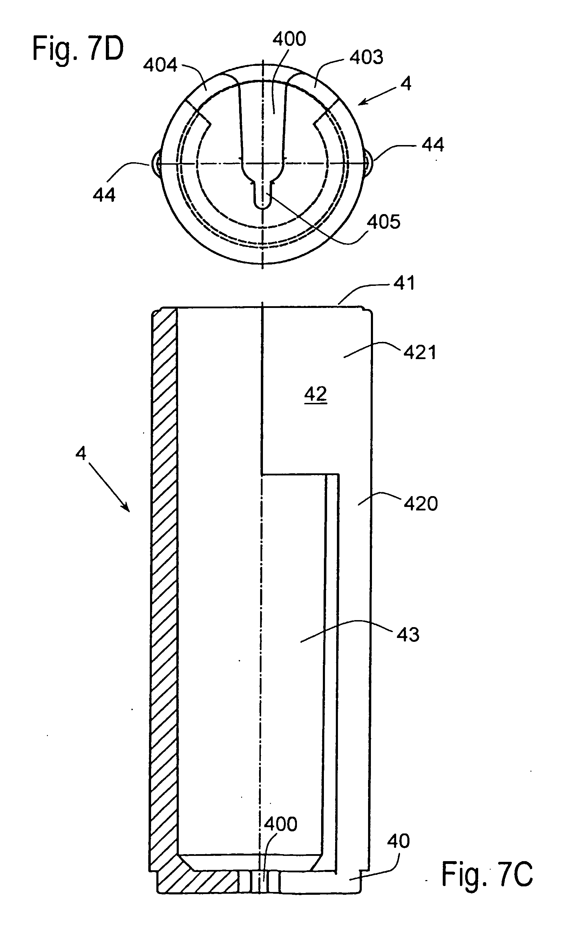

- Figur 7C:: die Ampulle gemäss Figur 7A als Teilschnitt in der Frontansicht;
- Figur 7D:: die Ampulle gemäss Figur 7A in der Draufsicht auf die Aussenseite der Fixierpartie;

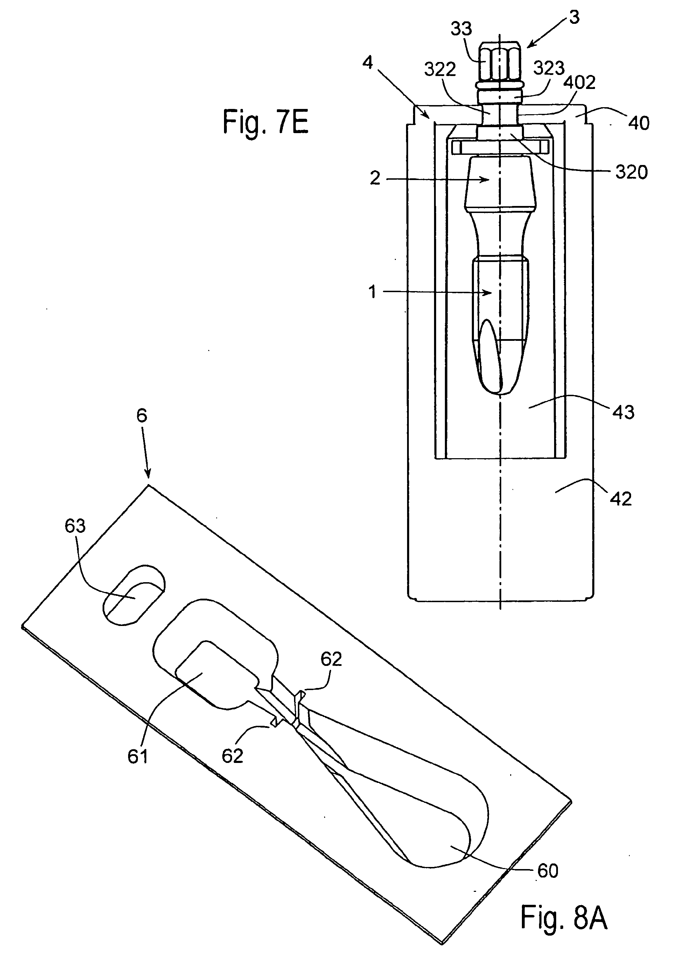

- Figur 7E:: die Kombination aus Implantat gemäss Figur 1A, Übertragungskappe gemäss Figur 2A und Adapter gemäss Figur 3B in die Ampulle gemäss Figur 7A eingesetzt, in der Frontansicht;
- Figur 8A:: eine Blisterpackung als alternatives Behältnis zur Aufbewahrung der Kombination aus Implantat gemäss Figur 1A, Übertragungskappe gemäss Figur 2A und Adapter gemäss Figur 3A, in perspektivischer Draufsicht;

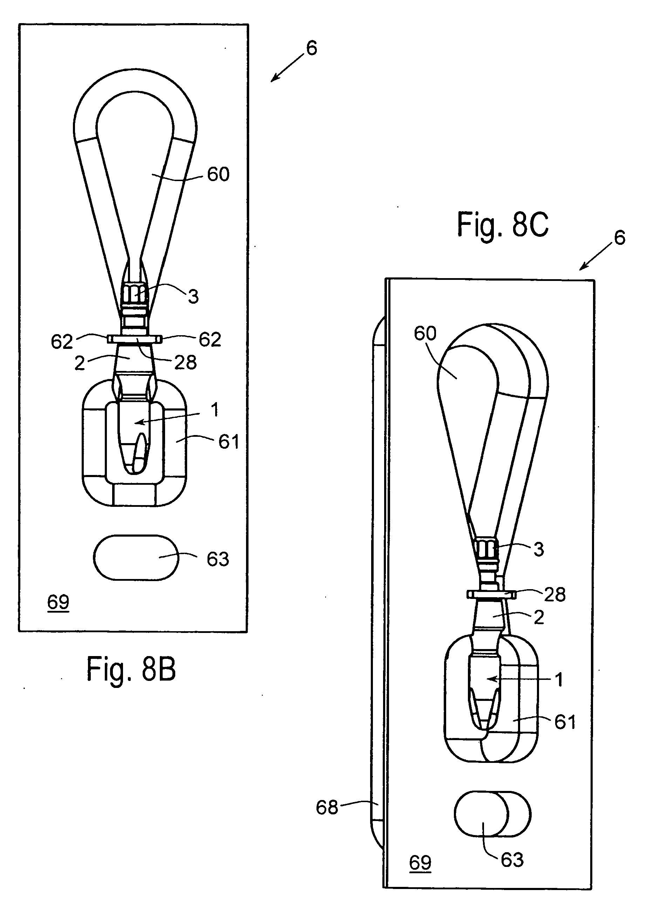

- Figur 8B:: die Blisterpackung gemäss Figur 8A, mit eingesetzter Kombination aus Implantat gemäss Figur 1A, Übertragungskappe gemäss Figur 2A und Adapter gemäss Figur 3B, in Draufsicht;
- Figur 8C:: die Darstellung gemäss Figur 8B, in perspektivischer Draufsicht;

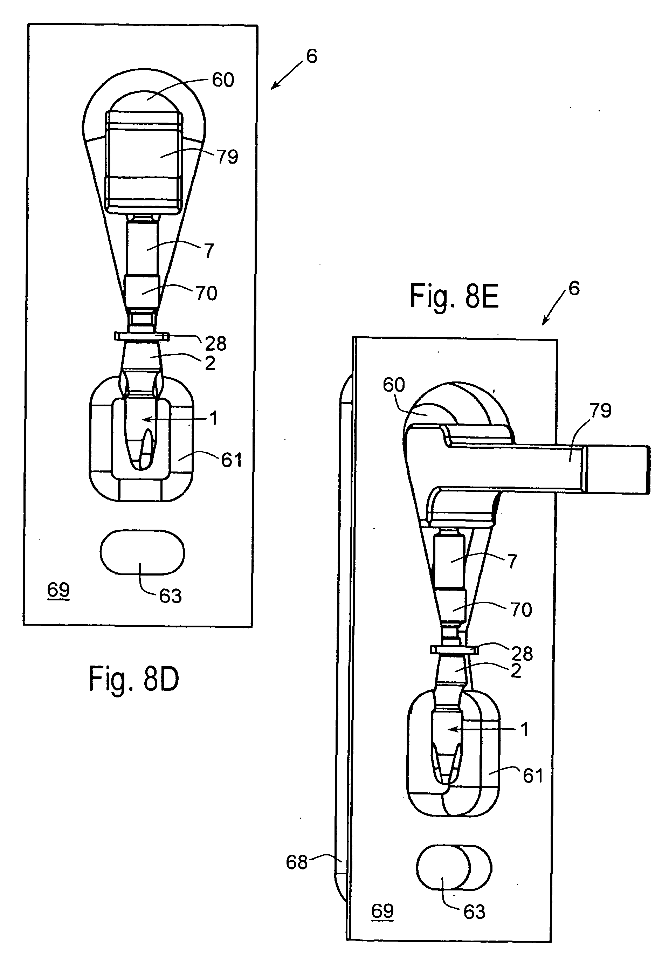

- Figur 8D:: die Darstellung gemäss Figur 8B, mit angesetztem Kupplungsstück;
- Figur 8E:: die Darstellung gemäss Figur 8D, in perspektivischer Draufsicht;

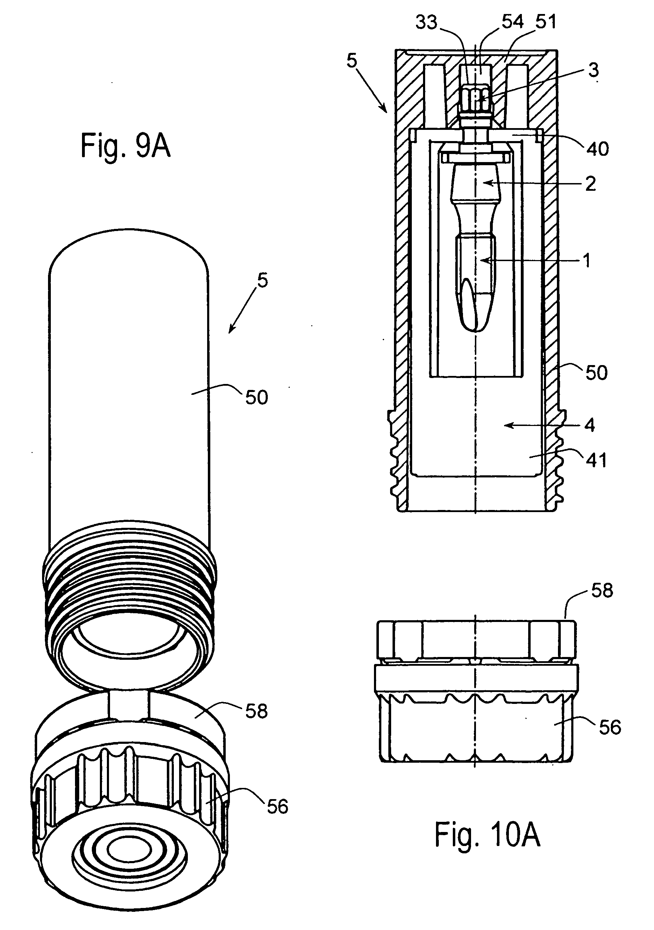

- Figur 9A:: eine an sich bekannte Aussenkapsel, mit abgeschraubtem Deckel, als Perspektivansicht;

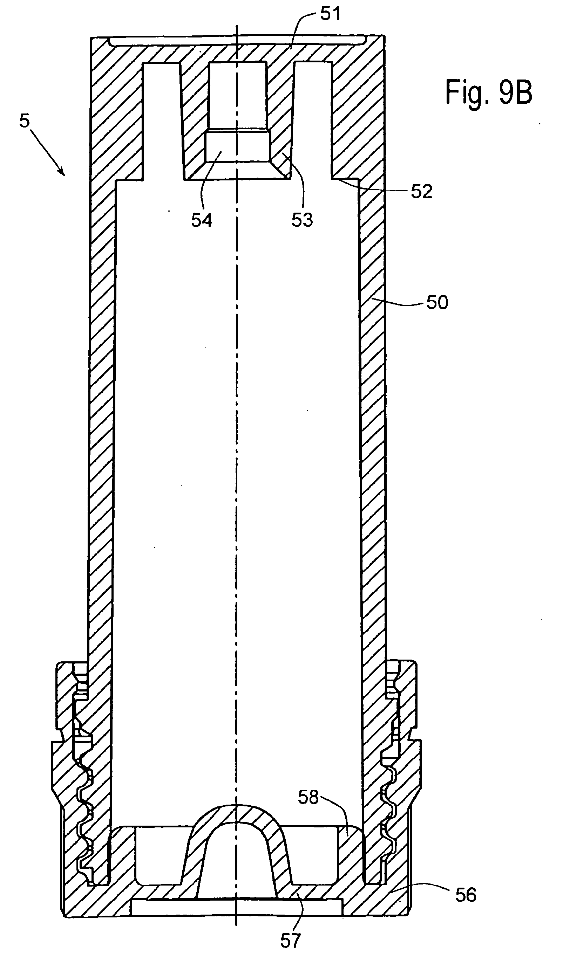

- Figur 9B:: die Aussenkapsel gemäss Figur 9A, mit aufgeschraubtem Deckel, als Vertikalschnitt;
- Figur 10A:: die Kombination gemäss Figur 7E aus Implantat, Übertragungskappe und Adapter in die Ampulle eingesetzt und von einer Aussenkapsel gemäss Figur 9A umgeben, mit abgeschraubtem Deckel, als Teilschnitt;

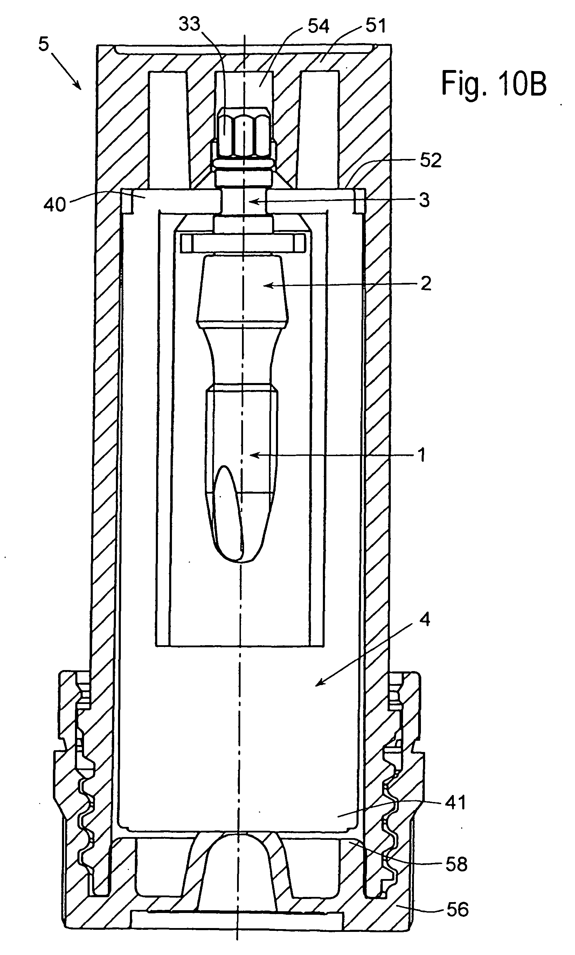

- Figur 10B:: die Darstellung gemäss Figur 10A, mit bestückter Ampulle in verschlossener Aussenkapsel, während der Lagerung oder dem Transport sowie in *Ausgangssituation* beim operativen Handling, als Teilschnitt;

Figuren 11A bis 12M: das prinzipielle operative Handling der Anordnung, beginnend bei der *Ausgangssituation* gemäss Figur 10B, bis zur Erstellung des Meistermodells und angrenzenden Schritten;

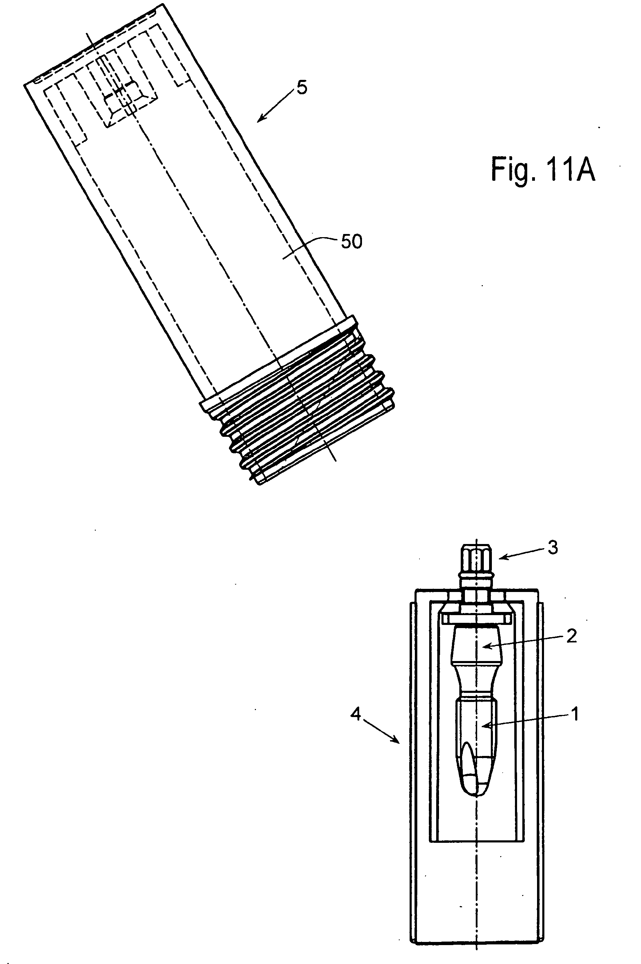

- Figur 11A:: *Schritt 1 -* Öffnen der Aussenkapsel durch Abschrauben des Deckels und Ausschütten der Ampulle aus der Aussenkapsel;

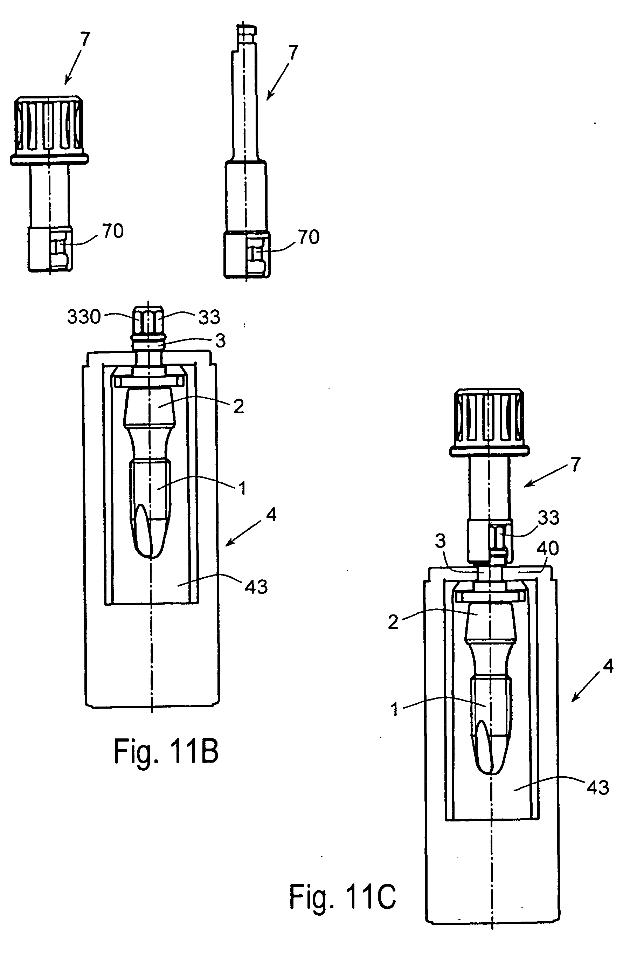

- Figur 11B:: *Schritt 2* - Bereitstellung der jeweiligen Kupplungsstücke für die alternativen Eindrehinstrumente zum Ansetzen an den Adapter;
- Figur 11C:: *Schritt 3* - Ansetzen einer Ratschenkupplung an den Adapter;

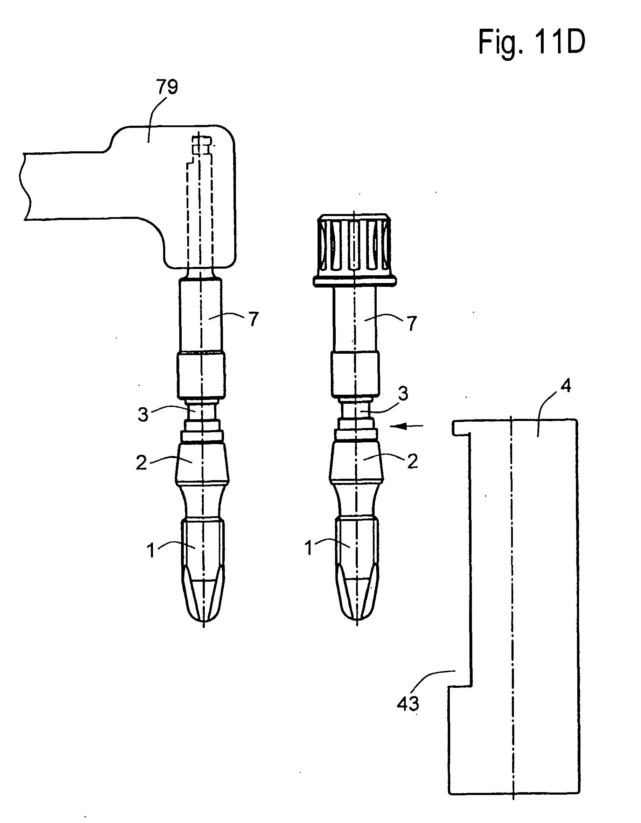

- Figur 11D:: *Schritt 4 -* Entnahme des Implantats aus der Ampulle mit an den Adapter alternativ angesetzter Ratschenkupplung oder einem Kupplungsstück für motorischen Antrieb;

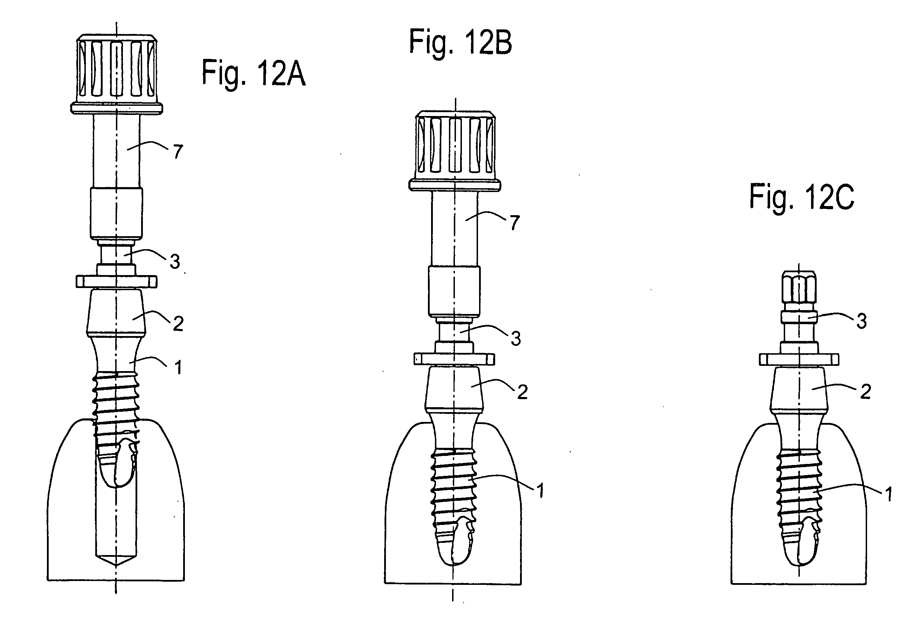

- Figur 12A:: *Schritt 5-* an den Adapter alternativ angesetzte Ratschenkupplung und Einschrauben des Implantats in den Knochen;
- Figur 12B:: *Schritt 6* - Eindrehen des Implantats in den Knochen bis zum Erreichen der vorgesehenen Tiefe;
- Figur 12C:: *Schritt* 7 - nach beendetem Eindrehen des Implantats Entfernen der Ratschenkupplung vom Adapter;

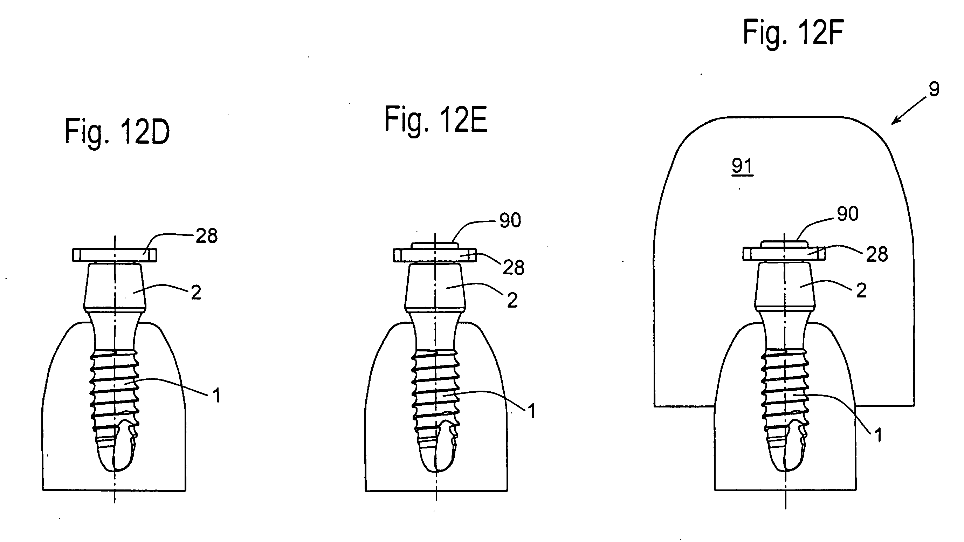

- Figur 12D:: *Schritt 8 -* Herausziehen des Adapters aus dem gesetzten Implantat mit der diesem aufgerastet verbleibenden Übertragungskappe;
- Figur 12E:: *Schritt 9* - Verschliessen der Eintrittsöffnung in die Übertragungskappe;
- Figur 12F:: *Schritt 10 -* Aufsetzen des mit Abdruckmasse gefüllten Abdrucklöffels auf das gesetzte Implantat mit der aufgerasteten Übertragungskappe zur Abdrucknahme;

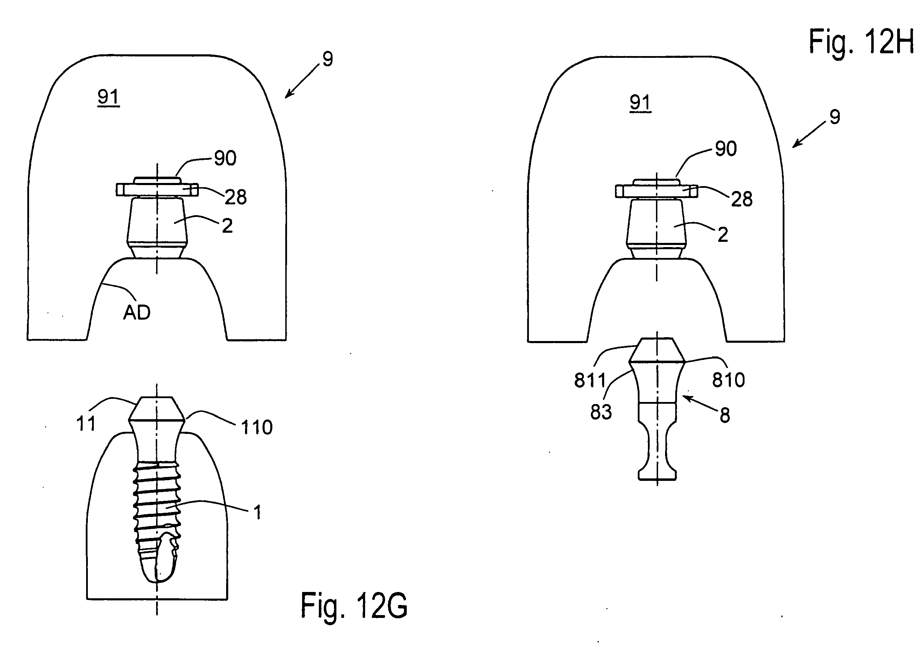

- Figur 12G:: *Schritt 11 -* Abziehen des Abdrucklöffels vom gesetzten Implantat, die Übertragungskappe verbleibt im Abdrucklöffel, der Abdruck ist genommen;
- Figur 12H:: *Schritt 12* - Heranführen eines Manipulierimplantats an die im Abdrucklöffel verbliebene Übertragungskappe;

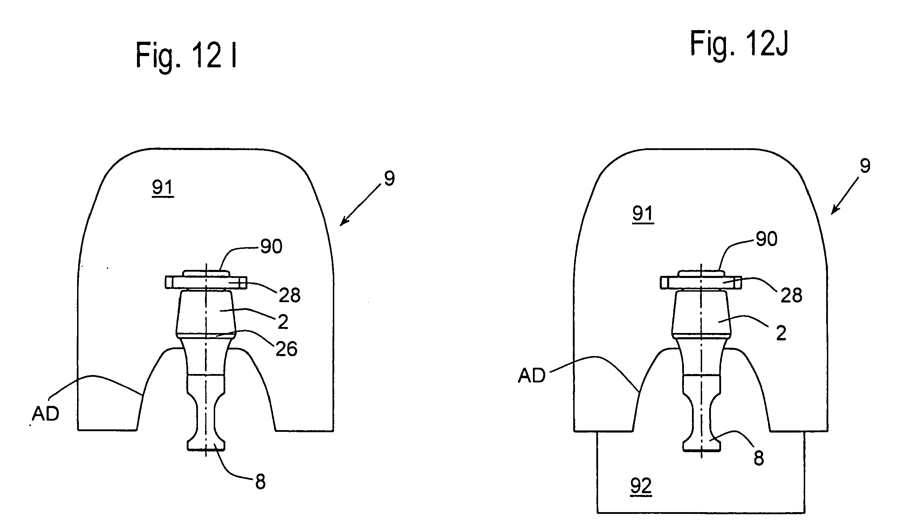

- Figur 12I:: *Schritt 13* - Einstecken des Manipulierimplantats in die im Abdrucklöffel verbliebene Übertragungskappe;
- Figur 12J:: *Schritt 14* - Auffüllen des Abdrucks, in dem das Manipulierimplantat steckt, mit Abdruckmasse;

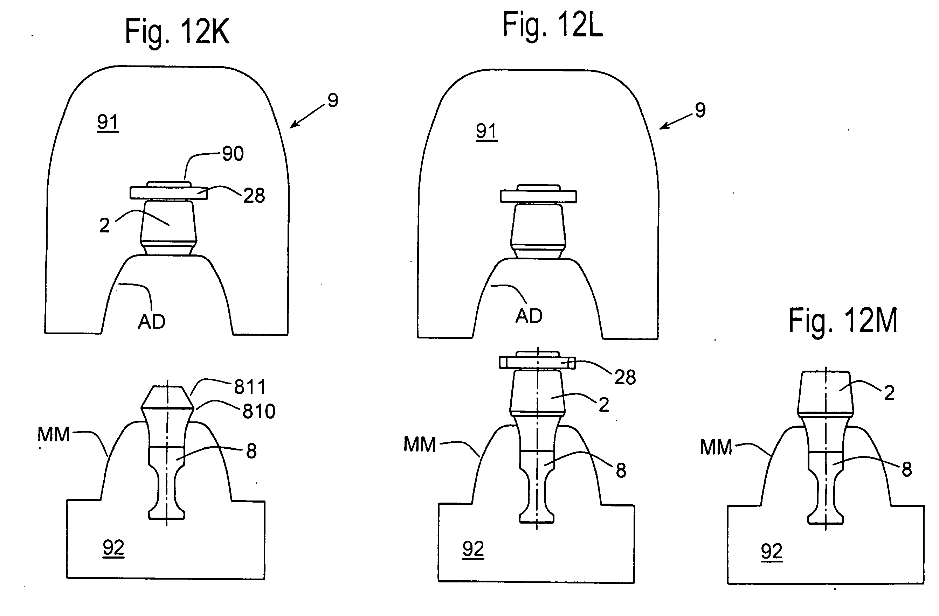

- Figur 12K:: *Schritt 15* - Entfernen des Abdrucklöffels vom erhaltenen Meistermodell, im Abdrucklöffel verbleibt die Übertragungskappe, im Meistermodell verbleibt das Manipulierimplantat;
- Figur 12L:: *Schritt 16* - Aufsetzen der aus dem Abdrucklöffel herausgenommenen Übertragungskappe auf das im Meistermodell steckende Manipulierimplantat;
- Figur 12M:: *Schritt 17* - Abtrennen des Retentionsflügels von der auf dem Manipulierimplantat steckenden Übertragungskappe;

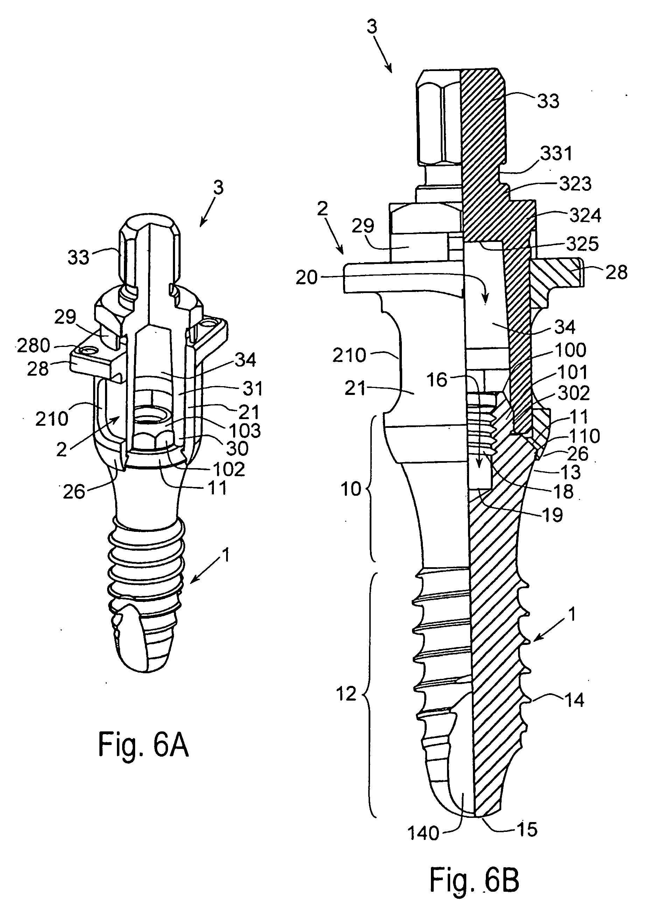

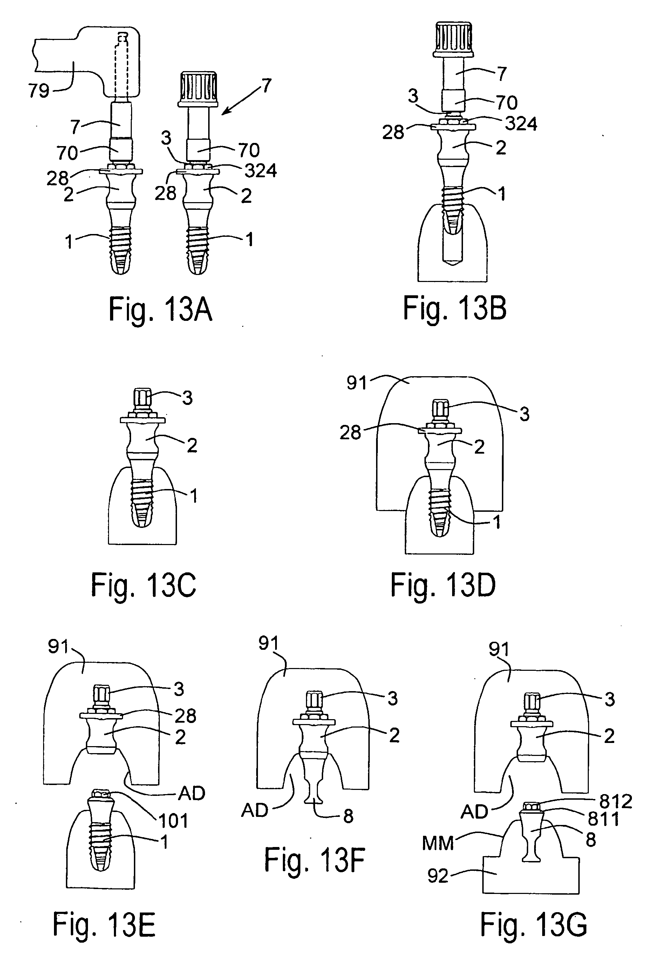

Figuren 13A bis 13G: das prinzipielle operative Handling mit der modifizierten Anordnung gemäss Figur 6A, bereits fortgeschritten, beginnend mit dem erledigten *Schritt 4,* bis zur Erstellung des Meistermodells, in verkürztem Ablauf;
- Figur 13A:: *Schritt 4 -* das Implantat wurde mit an den Adapter alternativ angesetzter Ratschenkupplung oder einem Kupplungsstück für motorischen Antrieb aus einem nicht gezeigten Behältnis entnommen;
- Figur 13B:: *Schritt 5 -* an den Adapter alternativ angesetzte Ratschenkupplung und Einschrauben des Implantats in den Knochen;
- Figur 13C:: *Schritt 7* - nach beendetem Eindrehen des Implantats Entfernen der Ratschenkupplung vom Adapter; mit dem Eindrehen des Implantats in den Knochen bis zum Erreichen der vorgesehenen Tiefe war der *Schritt 6* zuvor erledigt;
- Figur 13D:: *Schritt 10 -* Aufsetzen des mit Abdruckmasse gefüllten Abdrucklöffels auf das gesetzte Implantat mit der aufgerasteten Übertragungskappe und dem darin steckenden Adapter zur Abdrucknahme; die vorherigen *Schritte 8* und *9* mit dem Herausziehen des Adapters und dem Verschliessen der Eintrittsöffnung in die Übertragungskappe entfallen hier;
- Figur 13E:: *Schritt 11-* Abziehen des Abdrucklöffels vom gesetzten Implantat; die Übertragungskappe mit dem Adapter verbleiben im Abdrucklöffel, der Abdruck ist genommen;
- Figur 13F:: *Schritt 13* - Einstecken des modifizierten Manipulierimplantats in die im Abdrucklöffel verbliebene Übertragungskappe; mit dem Heranführen eines Manipulierimplantats an die im Abdrucklöffel verbliebene Übertragungskappe war der *Schritt 12* zuvor erledigt; und
- Figur 13G:: *Schritt 15 -* Entfernen des Abdrucklöffels vom erhaltenen Meistermodell, im Abdrucklöffel verbleibt die Übertragungskappe, im Meistermodell verbleibt das Manipulierimplantat; mit dem Auffüllen des Abdrucks, in dem das modifizierte Manipulierimplantat steckt, mit Abdruckmasse, war der *Schritt 14* zuvor erledigt.

### Ausführungsbeispiele

Für die gesamte weitere Beschreibung gilt folgende Festlegung: Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1A und 1 B

Das Implantat **1** hat hier die Gestalt einer Vollschraube und besitzt einen langgestreckten Körper mit dem oben gelegenen Implantatkopf **10,** welcher zuoberst mit dem im Prinzip ringförmigen Kamm **100** abschliesst, der in der horizontalen Ebene liegt. Vom Kamm **100** erstreckt sich die nach apikal konisch erweiterte Implantatschulter **11,** welche an der Schulterkante **110** endet, die am Implantatkopf **10** den maximalen Durchmesser einnimmt. Die Implantatschulter **11** nimmt zur Senkrechten z.B. einen Winkel von 30° ein und kann gegenüber herkömmlichen Dimensionen relativ breit ausgebildet sein. Unterhalb der Schulterkante **110** verjüngt sich der lmplantatkopf **10** trompetenförmig und geht in die Wurzelpartie **12** über, so dass unter der Schulterkante **110** eine Hinterschneidung **13** entsteht. Die sich nach apikal erstreckende Wurzelpartie **12** weist das Aussengewinde **14** auf, endet an der Implantatspitze **15** und ist zum Einsetzen in den Knochen bestimmt. Das Aussengewinde **14** ist vorzugsweise selbst-schneidend und besitzt Schneiden **140** im Bereich der lmplantatspitze **15.** Innerhalb des Kamms **100** mündet ein sich axial in das Implantat **1,** über die Höhe des Implantatkopfes **10** erstreckendes Sackloch **16.** Im Sackloch **16** ist eine nicht-rotationssymmetrische Innenkontur **17,** z.B. ein Innenachtkant, vorgesehen, der sich etwa bis auf das Niveau der Schulterkante **110** ausdehnt. Unterhalb der Innenkontur **17** liegt ein Innengewindeabschnitt **18,** der zum Bohrungsgrund **19** hin ausläuft. Die Innenkontur **17** dient, wie später beschrieben wird, zur Aufnahme eines Adapters. Der Innengewindeabschnitt **18** ist zur Aufnahme einer Einheilschraube bzw. zum Verschrauben der Prothetik, z.B. in Gestalt eines Steges oder einer Brücke, nutzbar. Herkömmlich besteht das Implantat **1** zumeist aus Titan und besitzt äusserlich eine die Osseointegration fördernde spezielle Oberflächenstruktur.

### Figuren 2A und 2B

Die einteilige Übertragungskappe **2** besteht im wesentlichen aus einem topfförmigen Hohlkörper **21** und einem oben den Hohlkörper **21** horizontal überdeckenden, plattenartigen Retentionsflügel **28.** Hohlkörper **21** und Retentionsflügel **28** sind an einer Trennstelle mit einer äusserlich, radial umlaufenden Nut **27,** und der dadurch entstehenden verminderten Wandstärke, miteinander verbunden. Durch die Übertragungskappe **2** erstreckt sich ein Axialdurchgang **20,** der als Zylinderabschnitt **200** auf der Oberseite des Retentionsflügels **28** mündet und sich bis unterhalb des Niveaus der Nut **27** ausdehnt. An den Zylinderabschnitt **200** schliesst sich ein im Querschnitt trapezförmiger Sims **22** an, der die lichte Weite des Axialdurchgangs **20** verengt. Oben auf dem Sims **22** gibt es eine ringförmige Sitzfläche **23,** die sich zum Zylinderabschnitt **200** hin konisch erweitert. Zur Achse des Axialdurchgangs **20** hat der Sims **22** eine senkrecht stehende Ringfläche **24,** von der ein Konusabschnitt **25,** sich hin zur Unterseite des Hohlkörpers **21** erweiternd, erstreckt. Zuunterst besitzt der Hohlkörper **21** eine zirkulär umlaufende, elastische Lippe **26,** die nach innen gewandt, den sich bis zum Ansatz der Lippe **26** erweiternden Axialdurchgang **20** abschliessend wieder einengt. Von der Nut **27** hin zur unteren Mündung des Axialdurchgangs **20** dehnt sich der Hohlkörper **21** äusserlich konisch aus, so dass im Bereich des Simses **22** die grösste Wandstärke vorhanden ist, welche zum Ansatz der Lippe **26** hin abnimmt.

### Figur 2C

In einer Modifikation der Übertragungskappe **2** ist die Mündung des Axialdurchgangs **20,** auf der Oberseite des Retentionsflügels **28,** mit einer sich nach aussen öffnenden Fase **201** versehen und diese Mündung von einem Kragen **29** umgeben. Am Kragen **29** ist eine nach innen gewandte Wulst **290** ausgebildet. Zur Erhöhung der Elastizität des Kragens **29** tragen Einschnitte **291** bei.

Der an der Übertragungskappe **2** bisher vorgesehene Retentionsflügel **28,** welcher sich oberhalb einer die Wandung verschmälernden Nut **27** an den Hohlkörper **21** anschliesst und die prinzipielle Form einer rechteckigen, abgerundeten Platte hat, könnte umgestaltet werden. Die Nut **27** ist verzichtbar, der Flügel **28** könnte ohne rotationssichernde Wirkung als kreisrunder Teller ausgebildet sein und schliesslich kann der Flügel **28** ganz entfallen.

### Figuren 3A und 3B

Der dargestellte Adapter **3** besteht aus einem Teil und hat die prinzipielle Gestalt eines mehrfach, unterschiedlich konturierten Bolzens. Der Adapter **3** strukturiert sich in die das untere Ende bildende Mitnehmersektion **30,** die sich anschliessende Haltesektion **31,** die darüber liegende Zwischensektion **32** und den das obere Ende bildenden Steckansatz **33.** Die Mitnehmersektion **30** besitzt eine nicht-rotationssymmetrische Aussenkontur **300 -** z.B. einen komplementären Achtkant - zum formschlüssigen Einstecken in die Innenkontur **17** am Implantat **1.** Als Anschrägung **301** läuft die Aussenkontur **300** am Übergang zur Haltesektion **31** aus. Die Haltesektion **31** wird von einem zylindrischen Abschnitt gebildet, der an die Anschrägung **301** ansetzt. Von der Haltesektion **31** aus betrachtet, besteht die Zwischensektion **32** aus einem ersten zylindrischen Bund **320,** einem zweiten zylindrischem Bund **323** und dem zwischen beiden Bunden **320,323** liegenden, im Durchmesser reduzierten Zylinderabschnitt **322.** Oberhalb des zweiten Bundes **323** beginnt der Steckansatz **33** mit einer Ringnut **331** zur Aufnahme eines Halteringes **332,** vorzugsweise in der Gestalt eines O-Ringes. Ansonsten ist der Steckansatz **33** mit einer nicht-rotationssymmetrischen Aussenkontur **330 -** z.B. ein Achtkant - zum formschlüssigen Aufstecken eines Kupplungsstücks für ein Eindrehinstrument, versehen.

### Figur 3C

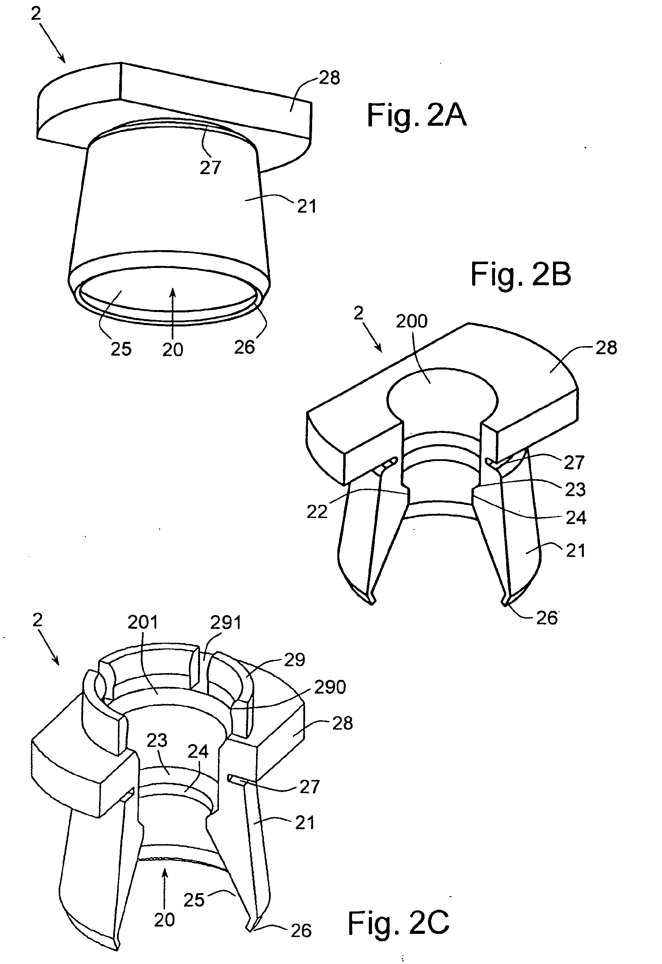

In einer Variation des Adapters **3 -** für das Zusammenwirken mit der modifizierten Übertragungskappe **2** gemäss Figur 2C - erstreckt sich die Haltesektion **31** bis auf den ersten zylindrischen Bund **320,** auf dem eine Radialnut **321** angeordnet ist.

### Figuren 4A und 4B

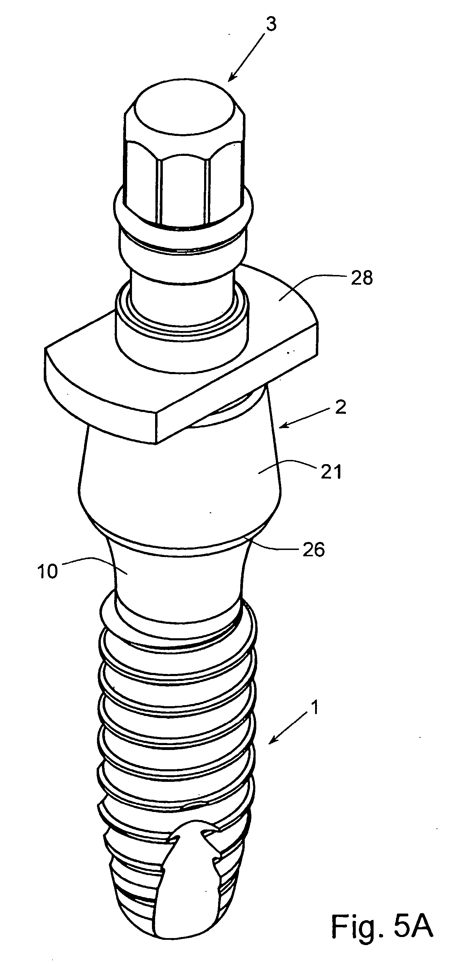

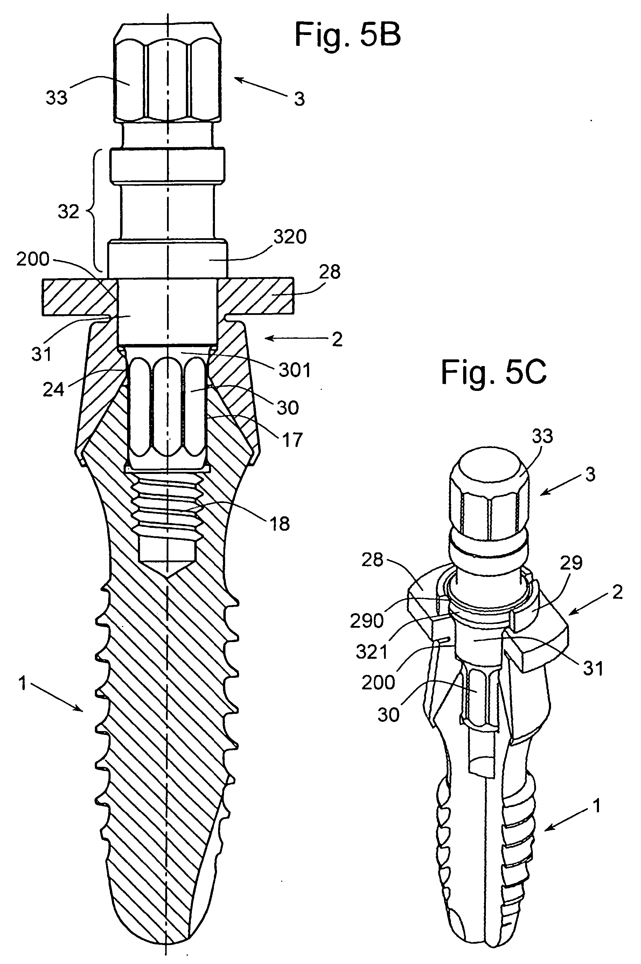

Im aufgerasteten Zustand sitzt die wieder abziehbare Übertragungskappe **2** mit ihrem internen Konusabschnitt **25** auf der Implantatschulter **11** auf und umfasst mit ihrer Lippe **26** die Schulterkante **110,** so dass die Lippe **26** in die Hinterschneidung **13** eingreift, welche im Verhältnis zur Schulterkante **110** einen verminderten Durchmesser hat. Das Sackloch **16** des Implantats **1** und der Axialdurchgang **20** der Übertragungskappe **2** liegen koaxial zueinander. Die Ringfläche **24** mit der geringsten lichten Weite innerhalb der Übertragungskappe **2** kommt oberhalb des Kamms **100** des Implantats **1** zu liegen. Hierbei bleibt der axiale Zugang zur Innenkontur **17** im Implantat **1** für den einzusetzenden Adapter **3** uneingeschränkt offen (s. Figuren 5A und 5B).

### Figuren 5A und 5B

Ist die Übertragungskappe **2** auf das Implantat 1 aufgerastet und der Adapter **3** steckt in voller Tiefe in dieser Kombination, so ragt die Mitnehmersektion **30** des Adapters **3** in die Innenkontur **17** im Implantat **1** und die Haltesektion **31** des Adapters **3** wird mit definiertem Reibschluss vom Zylinderabschnitt **200** der Übertragungskappe **2** umfasst. Die Ringfläche **24** der Übertragungskappe **2** umgibt die Anschrägung **301** und der erste zylindrische Bund **320** der Zwischensektion **32** der Übertragungskappe **2** setzt auf der Oberseite des Retentionstellers **28,** am Rand des hier mündenden Axialdurchgangs **20,** auf. Der Reibschluss zwischen der Übertragungskappe **2** und dem Adapter **3** ist derart dimensioniert, dass kein ungewolltes Herausgleiten des in der Übertragungskappe **2** und dem Implantat **1** steckenden Adapters **3** geschieht, sich jedoch der Adapter **3** mit vertretbarer Belastung für ein eingesetztes Implantat **1** herausziehen lässt.

### Figur 5C

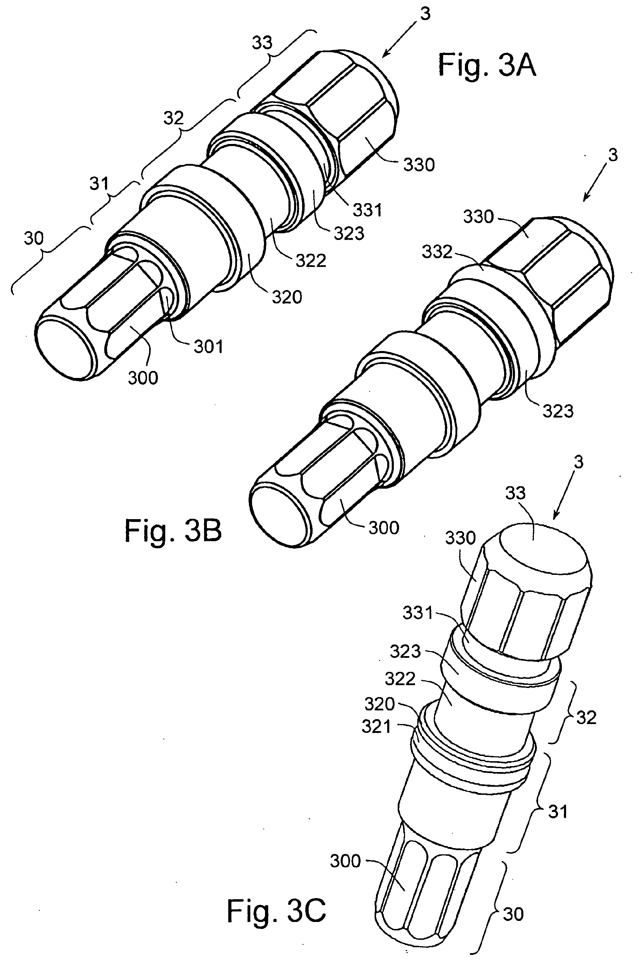

Bei der Anordnung aus Implantat **1,** der modifizierten Übertragungskappe **2** gemäss Figur 2C und dem modifizierten Adapter **3** gemäss Figur 3C wird der Halt des Adapters **3** in der Übertragungskappe **2** noch sicherer gewährleistet. Die Wulst **290** des elastisch spreizbaren Kragens **29** der Übertragungskappe **2** rastet, bei in voller Tiefe eingestecktem Adapter **3,** in die Radialnut **321** im ersten Bund **320** der verlängerten Haltesektion **31** am Adapter **3** ein. Beim Herausziehen des Adapters **3** aus der Anordnung, muss der Reibschluss zwischen Zylinderabschnitt **200** und Haltesektion **31** sowie die rückhaltende Kraft durch den elastisch lösbaren Eingriff zwischen Wulst **290** und Radialnut **321** überwunden werden.

### Figuren 6A und 6B

Bei dieser Kombination aus Implantat **1,** Übertragungskappe **2** und Adapter **3** sind die Bauteile modifiziert. Die Modifikationen beruhen auf einem im Kopfbereich **10** abgewandelten Implantat **1,** das oberhalb der Implantatschulter **11** einen Aussenvielkant **101** mit seinen radial verteilten Abflachungen **102,** z.B. acht an der Zahl, aufweist. Nach koronal, bis zum Kamm **100,** gehen die Abflachungen **102** in einen sich verjüngenden Konus **103** über. Ansonsten besitzt auch dieses Implantat **1** eine sich zur apikalen Implantatspitze **15** erstreckenden Wurzelpartie **12** mit dem Aussengewinde **14,** den Schneiden **140.** Äusserlich weist der lmplantatkopf **10** wiederum die Implantatschulter **11** auf, die an der Schulterkante **110** endet, unterhalb welcher die Hinterschneidung **13** liegt. Vom Kamm **100** umgeben wird die Mündung des sich axial in das Implantat **1** bis zum Bohrungsgrund **19** erstreckenden Sacklochs **16** mit dem Innengewinde **18.**

Mit dem Vorhandensein des Aussenvielkants **101** am Implantat **1** hat sich der Adapter **3** an seiner Mitnehmersektion **30** deutlich verändert, von der sich bis oberhalb der Haltesektion **31,** hin zum Bohrungsgrund **325,** ein axiales Sackloch **34** erstreckt, in welchem im aufgesetzten Zustand der Aussenvielkant **101** Platz findet. Die Abflachungen **102** werden formschlüssig von einer komplementären Innenkontur **302** an der Mitnehmersektion **30** des Adapters **3** umfasst. Unterhalb des Steckansatzes **33** besitzt der Adapter erneut die Ringnut **331,** an die sich ein zylindrischer Bund **323** anschliesst, dem eine im Durchmesser erweiterte Vielkantscheibe **324** folgt. Unterhalb der Vielkantscheibe **324** erstreckt sich die Haltesektion **31,** die in die Mitnehmersektion **30** übergeht.

Die Übertragungskappe **2** ist im Prinzip unverändert. Ganz unten am Hohlkörper **21** läuft die zirkuläre Lippe **26** um, während nach koronal der Retentionsflügel **28** liegt, auf dem sich der Kragen **29** befindet. Im Hohlkörper **21** sind grossflächige Durchbrüche **210** vorhanden und der Retentionsflügel **28** weist periphere Bohrungen **280** auf, die dem Anbringen eines Sicherungsfadens dienen können. Die Durchbrüche **210** erlauben das Anlagern von Abdruckmasse **91** an der Haltesektion **31** des Adapters **3,** wodurch die zusammengesteckte Kombination zusätzliche Fixierung erhält. Im zusammen gesetzten Zustand ist die Übertragungskappe **2** auf die Implantatschulter **11** aufgerastet, wobei die Lippe **26** die Implantatschulter **11** unterfasst und in die Hinterschneidung **13** eingreift. Der Adapter **3** stützt sich mit seiner Vielkantscheibe **324** auf dem Kragen **29** der Übertragungskappe **2** ab und die Haltesektion **31** steckt mit definierter Haftreibung im Hohlkörper **21.** Die Mitnehmersektion **30** umschliesst den erhabenen Aussenvielkant **101.**

### Figuren 7A bis 7D

Als erste Alternative für ein Behältnis zur Aufbewahrung der Anordnung aus Implantat **1,** Übertragungskappe **2** und Adapter **3,** wird für eine gesamthafte Darstellung die bereits vorbekannte Ampulle **4** beschrieben. Die Ampulle **4** hat auf der ersten Grundflächenseite eine Haltepartie **40** und auf der gegenüber liegenden, zweiten Grundflächenseite eine Standpartie **41.** Zwischen Haltepartie **40** und Standpartie **41** erstreckt sich der Zylindermantel **42** mit der grossflächigen Aussparung **43,** die von der Haltepartie **40** bis zur Standpartie **41** verläuft. Durch die seitliche Aussparung **43** ist das in der Ampulle **4** gehaltene Implantat **1** entnehmbar. Der im Bereich der Aussparung **43** verbleibende Zylindermantel **42** hat die Gestalt einer offenen Schale **420,** während in der Standpartie **41** der Zylindermantel **42** einen Rohrabschnitt **421** ergibt. Die zweite Grundflächenseite ist vorzugsweise offen.

Die Haltepartie **40** hat die Form einer kreisrunden Abschlussplatte, so dass diese Grundflächenseite weitgehend geschlossen ist und der Zylindermantel **42** senkrecht auf die Haltepartie **40** trifft. In der Haltepartie **40** befindet sich eine lateral offene Einbuchtung **400,** welche mit der Aussparung **43** in gleiche Richtung weist. Die Einbuchtung **400** ist schlitzförmig mit Abrundungen **401** am peripheren Eintritt. Im Verlauf der Einbuchtung **400** liegt eine Einschnürung **402,** hinter welcher sich die Einbuchtung **400** halbkreisartig erweitert. Hierdurch entstehen an der Haltepartie **40** zwei gegenüber liegende, maulartige Backen **403,404.** Über die Einbuchtung **400** hinaus, weiter in die Haltepartie **40** einschneidend zum Zylindermantel **42** hin, ist eine Dehnungsnut **405** vorgesehen, so dass beim Ein- und Ausdrücken eines ein Implantat 1 tragenden Adapters **3,** sich die Backen **403,404** besser elastisch spreizen lassen. Nachdem beim Eindrücken des Adapters **3** die Einschnürung **402** dessen Querschnitt überwunden hat, rastet der Adapter **3** in der Einbuchtung **400** ein, und die Backen **403,404** verengen sich wieder. Eine asymmetrische Materialverteilung und äusserlich am Zylindermantel **42** angeordnete Wülste **44** wirken auf eine rollende Ampulle **4** dämpfend und verhindern das Fortrollen.

### Figur 7E

Die Anordnung aus Implantat **1** mit aufgerasteter Übertragungskappe **2** und in beiden steckendem Adapter **3** ist in die Ampulle **4** eingesetzt. Hierbei ragt das Implantat **1** in das Innere der Ampulle **4,** ohne deren Zylindermantel **42** zu berühren und liegt unterhalb der fensterförmigen Aussparung **43.** Mit der Zwischensektion **32** ist der Adapter **3** in die Einbuchtung **400** der Haltepartie **40** der Ampulle **4** eingerastet. Hierbei liegt der Zylinderabschnitt **322** unterhalb der Einschnürung **402** und die beiden angrenzenden Bunde **320,323** stehen an der Haltepartie **40** an. Der Steckansatz **33** des Adapters **3** ragt frei nach aussen, so dass sich daran ein Instrument zum Ergreifen der Anordnung und Herausziehen aus der Ampulle **4** ansetzen lässt.

### Figuren 8A bis 8E

Als zweite geeignete Alternative für ein Behältnis zur Aufbewahrung der Anordnung aus Implantat **1,** Übertragungskappe **2** und Adapter **3,** wird eine Blisterpackung mit einer horizontalen Platte **69** und einem sich davon nach unten erstreckenden Schalenteil **68** vorgeschlagen. In der vorteilhaft aus transparentem Kunststoff tiefgezogenen Bodenform **6** ist eine sich über die Aussenkontur der Anordnung weiträumig ausdehnende Vertiefung vorgesehen, die sich in drei Sektionen gliedert, nämlich einerseits in eine Instrumenten-Aussparung **60** für den dort hinein ragenden Steckansatz **33** des Adapters **3;** andererseits besteht die Vertiefung aus einer Implantat-Aussparung **61,** in die das Implantat **1** mit der aufgerasteten Übertragungskappe **2** hineinragt. Zwischen der Instrumenten-Aussparung **60** und der gegenüber liegenden Implantat-Aussparung **61** sind zwei querlaufende, zueinander fluchtende Führungsschlitze **62** für die leicht klemmende Aufnahme des Retentionstellers **28** der Übertragungskappe **2** angeordnet.

Tiefe und Raum der Aussparungen **60,61** und Schlitze **62** sind so bemessen, dass in der Instrumenten-Aussparung **60** der nötige Freiraum zum Ansetzen eines Kupplungsstückes **7** und des Eindrehinstruments - z.B. ein zahnärztliches Handstück **79 -** vorhanden ist. Das Implantat 1 ist in der Implantat-Aussparung **61** so positioniert, dass es weder die seitlichen Wandungen, noch den Grund der Bodenform **6** berührt und keinesfalls mit dem nicht dargestellten Überzug zum Überdecken der Bodenform **6,** in Kontakt kommt. Innerhalb der Bodenform **6** können weitere Vertiefungen **63,** z.B. für die Einlagerung einer Einheilschraube, vorhanden sein.

### Figuren 9A und 9B

Im komplettierten Zustand ist die Ampulle **4** mit der darin eingesetzten Anordnung, gebildet aus Implantat **1,** Übertragungskappe **2** und Adapter **3** in eine Aussenkapsel **5** eingesetzt. Die Aussenkapsel **5** besteht aus einem hohlen Zylinder **50,** dessen Boden **51** geschlossen ist, und einem aufschraubbaren Verschlussdeckel **56.** Innerlich, beabstandet zum Boden **51,** ist am Rand des Zylinders **50** eine umlaufende Aufsetzschulter **52** vorgesehen, die als axialer Anschlag für die eingesetzte Ampulle **4** dient. Vom Niveau der Aufsetzschulter **52** und zentrisch im Zylinder **50** gelegen, erstreckt sich eine Trichteraufnahme **53** mit einem Sackloch **54** zum Boden **51** hin. Der Innenraum des Zylinders **50** erweitert sich zur Öffnung hin leicht konisch, um das Ausschütten der eingesetzten Ampulle **4** zu erleichtern und ein Verklemmen auszuschliessen. Der Verschlussdeckel **56** besitzt einen Boden **57,** von dem sich eine radial umlaufende Schulter **58** in die Öffnung des Zylinders **50** erstreckt. Auch die Schulter **58** des Verschlussdeckels **56** stellt einen axialen Anschlag für die eingesetzte Ampulle **4** dar.

### Figuren 10A und 10B

Ist die bestückte Ampulle **4** in die Aussenkapsel **5** eingesetzt, so ist die Haltepartie **40** der Ampulle **4** dem Boden **51** der Aussenkapsel **5** zugewandt, während die Standpartie **41** der Ampulle **4** in Richtung des Verschlussdeckels **56** der Aussenkapsel **5** weist. Der Steckansatz **33** des Adapters **3** ragt in das intern der Aussenkapsel **5** gelegene Sackloch **54** hinein. Bei aufgeschraubtem Verschlussdeckel **56** wird die Ampulle **4** zwischen der Aufsetzschulter **52** des Zylinders **50** und der Schulter **58** am Verschlussdeckel **56** axial stabilisiert.

### Figuren 11A bis 11D

Anhand der nachstehenden Figurenfolge wird das schrittweise Handling der Anordnung mit dem Implantat **1,** der Übertragungskappe **2** und dem Adapter **3, -** unter beispielhafter Verwendung einer Ampulle **4** mit der Aussenkapsel **5** als Behältnis - zunächst bis vor dem Einsetzen des Implantats **1** in den Knochen erläutert. Das Beispiel betrifft das Einsetzen eines Dentalimplantats in den menschlichen Kieferknochen. Ausgangspunkt ist, wo die Anordnung, bestehend aus dem Implantat **1,** der Übertragungskappe **2** und dem Adapter **3,** in einer Ampulle **4** eingesetzt ist, die sich ihrerseits in einer Aussenkapsel **5** befindet. Der in der Haltepartie **40** der Ampulle **4** klemmende Adapter **3** hält das Implantat **1** mit der aufgerasteten Übertragungskappe **2** in Position. Der gesamte Inhalt der Aussenkapsel 5 ist steril.

Figur 11A → *Schritt 1:* Um die Aussenkapsel **5** zu öffnen, wurde vom Zylinder **50** der Verschlussdeckel **56** abgenommen. Die Ampulle **4** wird mit der darin enthaltenen Anordnung aus dem jetzt offenen Zylinder **50** der Aussenkapsel **5** auf eine sterile Unterlage gekippt.

Figur→ 11B *→ Schritt 2:* Aus der Ampulle **4** ragt der Steckansatz **33** mit dem Aussenvielkant heraus. Zum Ansetzen eines Eindrehinstruments - z.B. eine Ratsche oder ein zahnärztliches Handstück **79 -** werden eine Ratschenkupplung **7** oder eine Kupplung **7** für das zahnärztliche Handstück bereitgehalten. Die Kupplungen **7** sind mit einer zur Aussenkontur **330** am Steckansatz **33** komplementären Steckaufnahme **70** versehen.

Figur 11 → *Schritt 3:* Ist eine Ratsche als Eindrehinstrument vorgesehen, steckt man eine Ratschenkupplung **7** auf den Steckansatz **33,** der über die Haltepartie **40,** aus der Ampulle **4** herausragt.

Figur → 11D *→ Schritt 4:* Mit der an den Steckansatz **33** alternativ angesetzten Ratschenkupplung **7** oder einem Kupplungsstück **7** für motorischen Antrieb, wird die Anordnung aus Implantat **1,** Übertragungskappe **2** und Adapter **3** aus der Ampulle **4** entnommen und zur Einsatzstelle transferiert.

### Figuren 12A bis 12M

Anhand der folgenden Figurenserie wird das weitere schrittweise Handling der Anordnung mit dem Implantat **1,** der Übertragungskappe **2** und dem Adapter **3,** bis zur Erstellung des Meistermodells und angrenzend darüber hinaus, erläutert. Das Beispiel bezieht sich wiederum auf die Dentalimplantologie.

Figur 12A → *Schritt 5*: Mit der an den Adapter **3** angesetzten Ratschenkupplung **7** wird das Implantat **1** zusammen mit der aufgerasteten Übertragungskappe **2** in den Knochen eingeschraubt. In der Regel dreht man das Implantat **1** zunächst leicht von Hand in die Sacklochbohrung im Kieferknochen ein, bevor das Eindrehinstrument (nicht gezeigt) angesetzt wird.

Figur 12B → *Schritt 6:* Das Implantat **1** wird bis zum Erreichen der vorgesehenen Tiefe in den Knochen eingedreht.

Figur → 12C *→ Schritt 7:* Nach beendetem Eindrehen wird die Ratschenkupplung **7** vom Adapter **3** abgenommen.

Figur 12D → *Schritt 8:* Der Adapter **3** wurde aus dem gesetzten Implantat **1,** mit der weiterhin aufgerastet verbleibenden Übertragungskappe **2,** gegen den Widerstand des Reibschlusses und den eventuell zusätzlichen kraftmässigen Eingriff zwischen Übertragungskappe **2** und Adapter **3,** herausgezogen.

Figur 12E → *Schritt 9:* Der nach dem Herausziehen des Adapters **3** nach oben offene, an der Oberseite des Retentionsflügels **28** mündende Axialdurchgang **20** in die Übertragungskappe **2,** wird mit einem Verschlussmedium **90** abgedichtet.

Figur 12F → *Schritt 10*: Über das eingesetzte Implantat **1,** mit der weiterhin aufgerasteten Übertragungskappe **2,** wird zur Abdrucknahme ein mit Abdruckmasse **91** gefüllter Abdrucklöffel **9** aufgesetzt.

Figur 12G. → *Schritt 11:* Der Abdrucklöffel **9** wird vom gesetzten Implantat **1** abgezogen, wobei die Übertragungskappe **2** eingebettet in der Abdruckmasse **91** im Abdrucklöffel **9** verbleibt. Beim Abziehen des Abdrucklöffels 9 öffnet sich die elastische Lippe **26** der Übertragungskappe **2** und springt über die Schulterkante **110** des Implantats **1.** Der Abdruck **AD** ist genommen und erscheint als solcher im Abdrucklöffel **9.**

Figur 12H. → *Schritt 12:* Ein zum gesetzten Implantat **1** komplementäres Manipulierimplantat **8** wird bereitgestellt. Das Manipulierimplantat **8** besitzt analog eine Schulter **811,** eine Schulterkante **810** und eine Hinterschneidung **83,** wie originär am Implantat **1** die Implantatschulter **11,** die Schulterkante **110** und die Hinterschneidung **13** vorhanden sind.

Figur 12 → *Schritt 13:* Das komplementäre Manipulierimplantat **8** wird in die im Abdrucklöffel **9** verbliebene Übertragungskappe **2** und den genommenen Abdruck **AD** eingesteckt. Hierbei rastet wiederum die Lippe **26** über die Schulterkante **810** am Manipulierimplantat **8** und greift in dessen Hinterschneidung **83** ein.

Figur 12J → *Schritt 14*: Der Abdruck **AD** mit dem darin steckenden Manipulierimplantat **8** wird mit einer Modellmasse **92,** üblicherweise Gips, aufgefüllt.

Figur 12K *→ Schritt 15:* Der Abdrucklöffel **9** mit der darin eingebetteten Übertragungskappe **2** wird vom Manipulierimplantat **8** mit der um dieses herum erhärteten Modellmasse **92** getrennt. Um das Manipulierimplantat **8** herum hat man das Meistermodell **MM** gewonnen, das der geometrischen Situation im Patientenmund entspricht.

Figur 12 *→ Schritt 16:* Aus dem Abdrucklöffel **9** wird die darin, in Abdruckmasse **91** eingebettete Übertragungskappe **2** herausgenommen und auf das im Meistermodell **MM** steckende Manipulierimplantat **8** aufgerastet.

Figur 12M *→ Schritt 17:* Für die weitere Bearbeitung wird der Retentionsflügel **28** von der auf dem Manipulierimplantat **8** steckenden Übertragungskappe 2 abgetrennt.

Der in den Figuren 12D bis 12M beschriebene Ablauf ist auch für die Erstellung einer Suprakonstruktion für Dentalbrücken und -stege anwendbar, die sich auf mehr als ein gesetztes Implantat **1** stützen. Vor der Abdrucknahme wurde der Adapter **3** aus der Kombination von Implantat **1,** Übertragungskappe **2** und Adapter **3** herausgezogen, und der frei werdende, dann nach oben offene, an der Oberseite des Retentionsflügels **28** mündende Axialdurchgang **20** in die Übertragungskappe **2** mit einem Verschlussmedium **90** abgedichtet (s. Figuren 12D bis 12F).

Die erfindungsgemässe Anordnung ist auch bei mehreren gesetzten Implantaten **1** für die Steg- oder Brückenversorgung vorteilhaft. Die dem *Schritt* 17 nachfolgenden Schritte zur Herstellung einer prothetischen Suprakonstruktion ergeben sich für den Fachmann. Die benachbarten Übertragungskappen **2,** welche auf den im Meistermodell **MM** verankerten Manipulierimplantaten **8** stecken, werden mit einem Steggerüst aus ausbrennbarem Kunststoff überbrückt und anschliessend wird der Verbund von den Manipulierimplantaten **8** abgezogen. Nun bringt man diesen Verbund aus Übertragungskappen **2** und Steggerüst in eine Einbettmasse. Nach dem Erhitzen der Einbettmasse entsteht ein Hohlraum, der mit - z.B. Titan oder Gold - ausgegossen, dem definitiven Steggerüst entspricht, welches nach der üblichen Oberflächenbehandlung auf die im Patientenmund eingebrachten Implantate 1 aufgesetzt wird.

### Figuren 13A bis 13G

Anhand dieser Figurenfolge wird das operative Handling mit der modifizierten Anordnung gemäss Figur 6A gezeigt, welches prinzipiell gleich ist, so dass in der Darstellung einleitende Schritte und Zwischenschritte übersprungen werden können.

Figur 13 → *Schritt 4*: Das Implantat **1** mit der aufgerasteten Übertragungskappe **2** wurde mit an den Adapter **3** alternativ angesetzter Ratschenkupplung **7** oder einem Kupplungsstück **7** für ein motorisch angetriebenes Handstück **79** aus einem nicht gezeigten Behältnis entnommen. Die Steckaufnahme **70** ergreift den Steckansatz **33** des Adapters **3.**

Figur 13B → *Schritt 5:* Das Implantat **1** wird zum Beispiel mit an den Adapter **3** angesetzter Ratschenkupplung **7** in den Knochen eingeschraubt. Die Übertragung der Drehbewegung von der Steckaufnahme **70** auf das Implantat **1** geschieht durch die Mitnahme des Adapters **3,** der mit seiner Innenkontur **302** den Aussenvielkant **101** des Implantats **1** formschlüssig umfasst.

Figur 13C *→ Schritt 7:* Das Implantat **1** wurde bis zur bestimmungsgemässen Tiefe in den Knochen eingedreht *(Schritt* 6) und danach die Ratschenkupplung **7** vom Adapter **3** abgezogen.

Figur 13D *→ Schritt 10:* Zur Abdrucknahme wird ein mit Abdruckmasse **91** gefüllter Abdrucklöffel über das gesetzte Implantat **1,** mit der aufgerasteten Übertragungskappe **2** und dem darin steckenden Adapter **3,** gebracht. Die Übertragungskappe **2** mit ihrem Retentionsflügel **28** sowie der Steckansatz 33 des Adapters **3** sind in Abdruckmasse **91** eingebettet. Das Herausziehen des Adapters 3 *(Schritt 8)* und das Verschliessen der Eintrittsöffnung *(Schritt 9*) in die Übertragungskappe **9** werden hier nicht durchgeführt.

Figur 13E → *Schritt 11:* Der Abdrucklöffel mit der Abdruckmasse **91** wird vom gesetzten Implantat **1** abgezogen, dessen Aussenvielkant **101** dadurch freiliegt. Die Übertragungskappe **2** mit dem Adapter **3** verbleibt in der Abdruckmasse **91** im Abdrucklöffel. Der Abdruck **AD** ist genommen.

Figur 13F *→ Schritt 13:* Im *Zwischenschritt 12* wurde ein Manipulierimplantat **8** an die in der Abdruckmasse **91** verbliebene Übertragungskappe **2** herangeführt und ist jetzt in diese rastend eingesteckt.

Figur 13G → *Schritt 15:* Im *Zwischenschritt 14* wurde der Abdruck **AD,** in dem das zum Implantat **1** mit dem Aussenvielkant **101** komplementäre Manipulierimplantat **8** steckt, mit Modellmasse **92** aufgefüllt. Nachdem der Abdrucklöffel mit der Übertragungskappe **2** und dem darin steckenden Adapter **3** vom Manipulierimplantat **8** getrennt wurden, erhält man das Meistermodell **MM** für das weitere zahntechnische Prozedere. Das Manipulierimplantat **8** besitzt ein dem Aussenvielkant **101** des Implantats **1** entsprechendes Vielkantanalog **812** sowie die komplementäre Analogschulter **811.**

Bei der prothetischen Versorgung eines gesetzten Implantats **1** für einen künstlichen Einzelzahn, bedarf es der Übertragung der Drehstellung zwischen dem gesetzten Implantat **1** mit eventuellem Abutment und der umgebenden Mundgeometrie. Zu diesem Zweck wird in Abweichung zum zuerst beschriebenen Verfahrensablauf, gemäss den Figuren 12C bis 12M, der Adapter **3** für die Abdrucknahme in der Übertragungskappe **2** und dem Implantat **1** stecken gelassen, im Abdrucklöffel **9** mit eingebettet und für die weiteren Schritte bei der Herstellung des Meistermodells **MM** genutzt.

## Patentansprüche

1. Anordnung für das Handling eines in Knochen einzusetzenden Implantats (1) mit einer auf das Implantat (1) lösbar aufsteckbaren Übertragungskappe (2) und einem am Implantat (1) eingreifenden Adapter (3);
a) das Implantat (1) besitzt einen Implantatkopf (10) und eine sich vom Implantatkopf (10) erstreckende Wurzelpartie (12);
aa) der Implantatkopf (10) weist eine intern gelegene, nicht- rotationssymmetrische Innenkontur (17) oder alternativ eine derartige Aussenkontur (101), eine äussere Implantatschulter (11) und eine unterhalb der Implantatschulter (11) gelegene Schulterkante (110) auf;
ab) unterhalb der Schulterkante (110) besitzt das Implantat (1) eine Hinterschneidung (13);
b) die Übertragungskappe (2) weist auf:
ba) eine zur Implantatschulter (11) komplementäre Kontaktfläche (25); und
bb) eine die Schulterkante (110) unterfassende, in die Hinterschneidung (13) eingreifende elastische Lippe (26);
c) der Adapter (3) weist auf:
ca) eine Mitnehmersektion (30), die zum formschlüssigen Eingriff mit der Innenkontur (17) bzw. Aussenkontur (101) am Implantat (1) bestimmt ist; und
cb)einen Steckansatz (33), der zum formschlüssigen Aufstecken eines Kupplungsstücks für ein Eindrehinstrument bestimmt ist; wobei
d) die Übertragungskappe (2) einen Axialdurchgang (20) zum Durchtritt des Adapters (3) zum Implantat (1) aufweist; und
e) bei auf das Implantat (1) aufgesteckter Übertragungskappe (2) und eingestecktem Adapter (3), dessen Mitnehmersektion (30) an der Innenkontur (17) bzw. an der alternativ vorhandenen Aussenkontur (101) formschlüssig angreift, wobei der Adapter (3) im Axialdurchgang (20) liegt und der Steckansatz (33) des Adapters (3) aus der Übertragungskappe (2) herausragt, wobei der durch den Axialdurchgang (20) durchtretende Adapter (3) und die Übertragungskappe (2) lösbar miteinander verbunden sind; wobei die Lösekraft für das Trennen der Verbindung zwischen Implantat (1) und Übertragungskappe (2) grösser bemessen ist, als Lösekraft für das Trennen der Verbindung zwischen Übertragungskappe (2) und Adapter (3).

2. Anordnung nach Anspruch 1, **dadurch gekennzeichnet, dass** zur lösbaren Verbindung zwischen Übertragungskappe (2) und Adapter (3):
a) die Übertragungskappe (2) einen inneren Abschnitt (200) und der Adapter (3) eine Haltesektion (31) aufweisen, die miteinander eine Reibschlussverbindung eingehen; oder
b) die Übertragungskappe (2) eine elastisch verformbare Kontur (290) und der Adapter (3) eine dazu komplementäre Gegenkontur (321) aufweisen, die mit einander eine kraftschlüssige Verbindung eingehen; oder
c) der innere Abschnitt (200) und die Haltesektion (31) für die Reibschlussverbindung sowie die Kontur (290) und die Gegenkontur (321) für die Kraftschlussverbindung zusammen vorhanden sind.

3. Anordnung nach Anspruch 2, **dadurch gekennzeichnet, dass**
a) der innere Abschnitt (200) an der Übertragungskappe (2) eine zylindrische Innenwandung ist;
b) die Haltesektion (31) am Adapter (3) ein Zylinderabschnitt ist;
c) die verformbare Kontur (290) an der Übertragungskappe (2) eine den Axialdurchgang (20) verengende Wulst (290) ist; und
d) die Gegenkontur (321) am Adapter (3) eine Radialnut (321) ist, in welche die Wulst (290) einrastet.

4. Anordnung nach Anspruch 1, **dadurch gekennzeichnet, dass**
a) die Übertragungskappe (2) einstückig ist und sich aus einem topfförmigen Hohlkörper (21) und einem sich daran angeordneten Retentionsflügel (28) zusammensetzt;
b) der Axialdurchgang (20) einerseits an der Unterseite des Hohlkörpers (21) und andererseits auf der Oberseite des Retentionsflügels (28) mündet;
c) die elastische Lippe (26) den Axialdurchgang (20) einengt und zuunterst am Hohlkörper (21) vorgesehen ist; und
d) der Hohlkörper (21) die innere Kontaktfläche (25) als auf die Implantatschulter (11) passenden Konusabschnitt (25) aufweist

5. Anordnung nach Anspruch 4, **dadurch gekennzeichnet, dass**
a) zwischen Hohlkörper (21) und Retentionsflügel (28) eine Nut (27) zum Abtrennen des Retentionsflügels (28) vorhanden ist;
b) der Retentionsflügel (28) sich im wesentlichen waagerecht, also senkrecht zum Axialdurchgang (20) stehend, erstreckt; und
c) auf der Oberseite des Retentionsflügels (28) der mündende Axialdurchgang (20) von einem Kragen (29) umgeben ist, an dem eine nach innen gewandte Wulst (290) ausgebildet ist und der zur Erhöhung der Elastizität des Kragens (29) Einschnitte (291) aufweisen kann.

6. Anordnung nach Anspruch 4 oder 5, **dadurch gekennzeichnet, dass**
a) der Hohlkörper (21) der Übertragungskappe (2) zumindest einen seitlichen Durchbruch (210) aufweist; und
b) im Retentionsflügel (28) zumindest eine Bohrung (280) vorgesehen ist.

7. Anordnung nach Anspruch 1, **dadurch gekennzeichnet, dass**
a) die nicht- rotationssymmetrische Innenkontur (17) im Implantat (1) ein Innenvielkant, z.B. ein Achtkant, ist; oder die alternativ vorgesehene Aussenkontur (101) am Implantat (1) ein Aussenvielkant, z.B. ein Achtkant, ist;
b) die Mitnehmersektion (30) am Adapter (3) - bei vorhandener Innenkontur (17) im Implantat (1) - ein Aussenvielkant, z.B. ein Achtkant, ist; oder
c) die Mitnehmersektion (30) am Adapter (3) - bei alternativ vorhandener Aussenkontur (101) am Implantat (1) - ein Innenvielkant (302), z.B. ein Achtkant, ist; und
d) der Steckansatz (33) am Adapter (3) ein Aussenvielkant ist.

8. Anordnung nach einem der Ansprüche 1, 2, 3 oder 7, **dadurch gekennzeichnet, dass** am Adapter (3)
a) sich an die Mitnehmersektion (30) die Haltesektion (31) anschliesst;
b) zwischen Haltesektion (31) und Steckansatz (33) eine Zwischensektion (32) liegt;
c) die Zwischensektion (32) einen ersten (320) und einen zweiten Bund (323) aufweist, zwischen denen ein im Durchmesser reduzierter Abschnitt (322) liegt; und
d) der erste Bund (320) die Radialnut (321) aufweist und zwischen dem Steckansatz (33) und dem zweiten Bund (323) eine Ringnut (331) zur Aufnahme eines Halteringes (332) vorhanden ist.

9. Anordnung nach einem der Ansprüche 1 bis 8, **dadurch gekennzeichnet, dass**
a) die Übemagungskappe (2) ein sich von apikal axial erstreckendes Sackloch (34) mit dem nach koronal abgrenzenden Bohrungsgrund (325) aufweist; und
b) zwischen dem Steckansatz (33) und der Haltesektion (31) eine gegenüber dem Durchmesser des Steckansatzes (33) und der Haltesektion (31) vergrösserte Vielkantscheibe (324) besitzt.

10. Anordnung nach Anspruch 1, **dadurch gekennzeichnet, dass**
a) sich das Implantat (1) unterhalb der Schulterkante (110) zur Wurzelpartie (12) hin trompetenförmig verjüngt, wodurch die Hinterschneidung (13) entsteht;
b) die Implantatschulter (11) eine Neigung im Bereich von 30° aufweist;
c) die Wurzelpartie (12) mit einem Aussengewinde (14), vorzugsweise selbst schneidend, versehen ist; und
d) bei vorhandener Innenkontur (17) am Implantat (1) oder bei alternativ vorhandener Aussenkontur (101) am Implantat (1), innerhalb eines Sacklochs (16), ein Innengewindeabschnitt (18) angeordnet sein kann.

11. Anordnung nach Anspruch 1, **dadurch gekennzeichnet, dass**
a) die Kombination aus Implantat (1), auf das Implantat (1) aufgesteckter Ubertragungskappe (2) und durch die Ubertragungskappe (2) durchgesteckten Adapter (3), für die operative Applikation in einem sterilen Behältnis (4, 6) aus einer fixierten Lage lösbar, angeordnet ist; und
b) hierbei der Steckansatz (33) für das Ergreifen mittels eines Instruments, zu meist ein Eindrehinstrument, mit eventuell zuvor an den Steckansatz (33) an gestecktem Kupplungsteil (7), zugänglich positioniert ist.

12. Anordnung nach Anspruch 11, **dadurch gekennzeichnet, dass**
a) das Behältnis für die Kombination (1,2,3) eine in eine Aussenkapsel (5) einsetzbare Ampulle (4) ist;
b) die Ampulle (4) aufweist:
ba) einen äusseren Mantel (42);
bb) eine seitliche, grossflächige Aussparung (43) im Mantel (42), durch welche das in der Ampulle (4) gehalterte Implantat (1) herausnehmbar ist; und
bc) eine Haltepartie (40) mit einer lateral offenen Einbuchtung (400), die mit der Aussparung (43) in die gleiche Richtung weist; und
c) der die Übertragungskappe (2) und das Implantat (1) tragende Adapter (3), mit seiner Zwischensektion (32), in die Einbuchtung (400) lösbar eingerastet ist, wodurch das vom Adapter (3) getragene Implantat (1) berührungslos in der Ampulle (4) gelagert ist.

13. Anordnung nach Anspruch 11, **dadurch gekennzeichnet, dass**
a) das Behältnis für die Kombination (1,2,3) eine Blisterpackung mit einer tiefgezogenen Bodenform (6) ist;
b) die Bodenform (6) eine mehrgliedrige Vertiefung (60,61,62), die sich über die o Aussenkontur der Anordnung (1, 2,3) weiträumig ausdehnt, aufweist, nämlich:
ba) eine Instrumenten- Aussparung (60) für den dort hinein ragenden Steckansatz (33) des Adapters (3);
bb) eine der Instrumenten-Aussparung (60) gegenüber liegende Implantat-Aussparung (61), in die das Implantat (1) mit der aufgesteckten Übertragungskappe (2) hineinragt; und
bc) zwischen der Instrumenten-Aussparung (60) und der Implantat-Aussparung (61) zwei querlaufende, zueinander fluchtende Führungsschlitze (62) für die leicht klemmende Aufnahme des Retentionsflügels (28) der Übertragungskappe (2), wodurch das von der Übertragungskappe (2) gestützte Implantat (1) berührungslos in der Bodenform (6) gelagert ist.

14. Anordnung nach Anspruch 13, **dadurch gekennzeichnet, dass**
a) die Bodenform (6) mit einem Überzug überdeckt ist; und
b) innerhalb der Bodenform (6) weitere Vertiefungen (63), z. B. für die Einlagerung einer Einheilschraube, vorhanden sein können.

15. Anordnung nach Anspruch 1, **dadurch gekennzeichnet, dass**
a) die Übertragungskappe (2) nach genommenem Abdruck (AD), beim Abziehen einer Abdruckform (9) sich vom Implantat (1) löst und in der Abdruckform (9) verbleibt;
b) in die in der Abdruckform (9) verbliebenen Abdruckkappe (2) ein Manipulierimplantat (8) mit einer analogen Schulterkante (810) und Hinterschneidung (83) rastend einsteckbar ist; und c) beim Trennen des mit Modellmasse (92) aufgefüllten Abdrucks (AD), ein Meistermodell (MM) mit darin eingebettetem Manipulierimplantat (8) entsteht; und hierbei die vorzugsweise aus ausbrennbarem Kunststoff bestehende Übertragungskappe (2) wieder in der Abdruckform (9) verbleibt.

## Claims

1. Assembly for handling an implant (1) to be inserted into bones with a transfer cap (2), which may be attached to the implant (1) in a detachable way, and an adaptor (3), which engages with the implant (1);
a) the implant (1) has an implant head (10) and a root part (12), which extends from the implant head (10);
aa) the implant head (10) has a non-rotationally symmetrical internal contour (17), which is located internally, or alternatively an external contour (101) of this kind, an external implant shoulder (11) and a shoulder edge (110), which is located underneath the implant shoulder (11);
ab) the implant (1) has an undercut (13) underneath the shoulder edge (110);
b) the transfer cap (2) has:
ba) a contact surface (25), which is complementary to the implant shoulder (11); and
bb) an elastic lip (26) under the shoulder edge (110), which engages in the undercut (13);
c) the adaptor (3) has:
ca) a carrier section (30), which is intended for engaging with the internal contour (17) or external contour (101) on the implant in a positive way; and
cb) a plug-type extension (33), which is intended for attaching a connection piece for a screw-in instrument in a positive way; in which
d) the transfer cap (2) has an axial passage (20) for the adapter (3) to come through to the implant (1); and
e) with the transfer cap (2) attached to the implant (1) and the adapter (3) inserted, the carrier section (30) of which engages with the internal contour (17) or alternatively the external contour (101) in a positive way, in which the adapter (3) is in the axial passage (20) and the plug-type extension (33) of the adapter (3) projects from the transfer cap (2), in which the adapter (3), which passes through the axial passage (20), and the transfer cap (2) are connected to each other in a detachable way; in which the detaching force for breaking the connection between the implant (1) and the transfer cap (2) is greater than the detaching force for breaking the connection between the transfer cap (2) and the adapter (3).

2. Assembly according to claim 1, **characterised in that** for connecting the transfer cap (2) and the adapter (3) in a detachable way:
a) the transfer cap (2) has an internal section (200) and the adapter (3) has a holding section (31), which form a frictional connection with each other; or
b) the transfer cap (2) has a contour (290), which may be elastically deformed, and the adapter (3) has a counter contour (321), which is complementary to it, which form a connection with each other in a non-positive way; or
c) there are both the internal section (200) and the holding section (31) for the frictional connection and the contour (290) and the counter contour (321) for the connection in a non-positive way.

3. Assembly according to claim 2, **characterised in that**
a) the internal section (200) on the transfer cap (2) is a cylindrical internal wall;
b) the holding section (31) on the adapter (3) is a cylinder section;
c) the contour (290) on the transfer cap (2), which may be deformed, is a bulge (290), which narrows the axial passage (20); and
d) the counter contour (321) on the adapter (3) is a radial groove (321), in which the bulge (290) engages.

4. Assembly according to claim 1, **characterised in that**
a) the transfer cap (2) is in one piece and is made up of a hollow body (21) shaped like a pot and a retention wing (28) arranged on it;
b) the axial passage (20) comes out at the bottom of the hollow body (21) on the one hand and at the top of the retention wing (28) on the other hand;
c) the elastic lip (26) narrows the axial passage (20) and is right at the bottom of the hollow body (21); and
d) the hollow body (21) has the internal contact surface (25) as a cone section (25) adapted to the implant shoulder (11).

5. Assembly according to claim 4, **characterised in that**
a) there is a groove (27) between the hollow body (21) and the retention wing (28) to detach the retention wing (28);
b) the retention wing (28) extends essentially horizontally, that is perpendicular to the axial passage (20); and
c) the axial passage (20) coming out at the top of the retention wing (28) is surrounded by a collar (29), on which a bulge (290) facing inwards is formed, which may have incisions (291) to increase the elasticity of the collar (29).

6. Assembly according to claim 4 or 5, **characterised in that**
a) the hollow body (21) of the transfer cap (2) has at least one side opening (210); and
b) there is at least one hole (280) in the retention wing (28).

7. Assembly according to claim 1, **characterised in that**
a) the non-rotationally symmetrical internal contour (17) in the implant (1) is an internal polygonal socket, octagonal for example; or alternatively the external contour (101) on the implant (1) is an external polygonal socket, octagonal for example;
b) the carrier section (30) on the adapter (3) - with an internal contour (17) in the implant (1) - is an external polygonal socket, octagonal for example; or
c) the carrier section (30) on the adapter (3) - alternatively with an external contour (101) on the implant (1) - is an internal polygonal socket (302), octagonal for example; and
d) the plug-type extension (33) on the adapter (3) is an external polygonal socket.

8. Assembly according to one of claims 1, 2, 3 or 7, **characterised in that** on the adapter (3)
a) the holding section (31) connects with the carrier section (30);
b) there is an intermediate section (32) between the holding section (31) and the plug-type extension (33);
c) the intermediate section (32) has a first (320) and a second flange (323), between which there is a section (322) with a reduced diameter; and
d) the first flange (320) has a radial groove (321) and there is a ring groove (331) between the plug-type extension (33) and the second flange (323) to take a holding ring (322).

9. Assembly according to one of claims 1 to 8, **characterised in that**
a) the transfer cap (2) has a blind hole (34), which extends apically and axially with the coronally limiting hole base (325); and
b) has a polygonal disc (324) between the plug-type extension (33) and the holding section (31), which is larger in relation to the diameter of the plug-type extension (33) and the holding section (31).

10. Assembly according to claim 1, **characterised in that**
a) the implant (1) narrows in a trumpet shape underneath the shoulder edge (110) towards the root part (12), by which the undercut (13) is produced;
b) the implant shoulder (11) has a slope in the range of 30°.
c) the root part (12) has an external thread (14), preferably self-cutting; and
d) with an internal contour (17) on the implant (1) or alternatively an external contour (101) on the implant (1), an internal threaded section (18) may be arranged within a blind hole (16).

11. Assembly according to claim 1, **characterised in that**
a) the combination of implant (1), transfer cap (2) attached to the implant (1) and adapter (3) passed through the transfer cap (2), is arranged so that it may be detached from a fixed position in a sterile container (4, 6) for operative application; and
b) in so doing, the plug-type extension (33) for engaging by means of an instrument, for the most part a screw-in instrument, possibly with a connecting part (7) attached to the plug-type extension (33) beforehand, is positioned accessibly.

12. Assembly according to claim 11, **characterised in that**
a) the container for the combination (1,2,3) is an ampoule (4), which may be inserted in an external capsule (5);
b) the ampoule (4) has:
ba) an external covering (42);
bb) a large side opening (43) in the covering (42), through which the implant (1) held in the ampoule (4) may be taken out; and
bc) a holding part (40) with an indentation (400) open at the side, which follows the same direction as the opening (43); and
c) the adapter (3), which carries the transfer cap (2) and the implant (1), which is engaged in the indentation (400) in a detachable way with its intermediate section (32), by which the implant (1), which is carried by the adapter (3), is seated in the ampoule (4) without being touched.

13. Assembly according to claim 11, **characterised in that**
a) the container for the combination (1, 2, 3) is a blister pack with a deep drawn base form (6);
b) the base form (6) has a multiple-member depression (60, 61, 62), which extends over the external contour of the assembly (1, 2, 3), that is:
ba) an instrument opening (60) for the plug-type extension (33) of the adapter (3) projecting into it there;
bb) an implant opening (61) opposite the instrument opening (60), into which the implant (1) projects with the transfer cap (2) attached to it; and
bc) two guide slots (62) running crosswise, aligned with each other between the instrument opening (60) and the implant opening (61) to take the retention wing (28) of the transfer cap (2) in a gently clamped way, by which the implant (1), which is supported by the transfer cap (2), is seated in the base form (6) without being touched.

14. Assembly according to claim 13, **characterised in that**
a) the base form (6) is covered with a covering; and
b) there may be other depressions (63) inside the base form (6) for inclusion of a screw, for example.

15. Assembly according to claim 1, **characterised in that**
a) after an impression is taken (AD), the transfer cap (2) is detached from the implant (1) when an impression form (9) is produced and remains in the impression form (9);
b) a manipulating implant (8) may be inserted in the impression cap (2) left in the impression form (9), which lockingly engages with a similar shoulder edge (810) and undercut (83); and c) when separating the impression (AD) filled with model mass (92), a master model (MM) is produced with the manipulation implant (8) embedded in it; and in so doing the transfer cap (2), which preferably consists of plastic, which may be burned out, again remains in the impression form (9).

## Revendications

1. Dispositif pour manipuler un implant (1) à insérer dans de l'os comprenant un capuchon de transmission (2) emboîtable de façon amovible sur l'implant (1) et un adaptateur (3) s'engageant sur l'implant (1) ;
a) l'implant (1) présente une tête d'implant (10) et une partie de racine (12) s'étendant à partir de la tête d'implant (10) ;
aa) la tête d'implant (10) présente un contour intérieur (17) situé à l'intérieur et non symétrique en rotation ou comme alternative un contour extérieur (101) de ce type, un épaulement d'implant (11) extérieur et une arête d'épaulement (110) située au-dessous de l'épaulement d'implant (11) ;
ab) au-dessous de l'arête d'épaulement (110), l'implant (1) présente une contre-dépouille (13) ;
b) le capuchon de transmission (2) présente :
ba) une surface de contact (25) complémentaire à l'épaulement d'implant (11) ; et
bb) une lèvre (26) élastique, saisissant par-dessous l'arête d'épaulement (110) et s'engageant dans la contre-dépouille (13) ;
c) l'adaptateur (3) présente :
ca) une section d'entraîneur (30), pour un engagement par complémentarité de formes avec le contour intérieur (17) ou le contour extérieur (101) sur l'implant (1) ; et
cb) une embase emboîtable (33), pour un emboîtement par complémentarité de formes d'une pièce d'accouplement pour un instrument de vissage ;
d) le capuchon de transmission (2) présentant un passage axial (20) pour le passage de l'adaptateur (3) vers l'implant (1) ; et
e) lorsque le capuchon de transmission (2) est emboîté sur l'implant (1) et l'adaptateur (3) est emboîté à l'intérieur, adaptateur dont la section d'entraîneur (30) s'applique par complémentarité de formes sur le contour intérieur (17) ou sur le contour extérieur (101) présent de façon alternative, l'adaptateur (3) étant situé dans le passage axial (20) et l'embase emboîtable (33) de l'adaptateur (3) dépassant du capuchon de transmission (2), l'adaptateur (3) traversant le passage axial (20) et le capuchon de transmission (2) étant reliés l'un à l'autre de façon amovible, la force de desserrage pour la séparation de la liaison entre l'implant (1) et le capuchon de transmission (2) étant conçue plus grande que la force de desserrage pour la séparation de la liaison entre le capuchon de transmission (2) et l'adaptateur (3).

2. Dispositif selon la revendication 1, **caractérisé en ce que**, pour la liaison amovible entre le capuchon de transmission (2) et l'adaptateur (3) :
a) le capuchon de transmission (2) et l'adaptateur (3) présentent respectivement une partie (200) intérieure et une section de retenue (31), qui entraînent l'un avec l'autre une liaison par friction ; ou
b) le capuchon de transmission (2) et l'adaptateur (3) présentent respectivement un contour (290) élastiquement déformable et un contre-contour (321) complémentaire au premier, lequel entraînent l'un avec l'autre une liaison par adhérence de force ; ou
c) la partie (200) intérieure et la section de retenue (31) pour la liaison par friction ainsi que le contour (290) et le contre-contour (321) pour la liaison par adhérence de force sont présents ensemble.

3. Dispositif selon la revendication 2, **caractérisé en ce que**
a) la partie (200) intérieure sur le capuchon de transmission (2) est une paroi intérieure cylindrique ;
b) la section de retenue (31) sur l'adaptateur (3) est une partie cylindrique ;
c) le contour (290) déformable sur le capuchon de transmission (2) est un renflement (290) rétrécissant le passage axial (20) ; et
d) le contre-contour (321) sur l'adaptateur (3) est une rainure radiale (321) dans laquelle s'enclenche le renflement (290).

4. Dispositif selon la revendication 1, **caractérisé en ce que**
a) le capuchon de transmission (2) est d'une seule pièce et se compose d'un corps creux (21) en forme de pot et d'une ailette de rétention (28) disposée dessus ;
b) le passage axial (20) débouche d'une part sur le côté inférieur du corps creux (21) et d'autre part sur le côté supérieur de l'ailette de rétention (28) ;
c) la lèvre (26) élastique rétrécit le passage axial (20) et est prévue tout en bas sur le corps creux (21) ; et
d) le corps creux (21) présente la surface de contact (25) intérieure en tant que partie conique (25) adaptée à l'épaulement d'implant (11).

5. Agencement selon la revendication 4, **caractérisé en ce que**
a) une rainure (27) est présente entre le corps creux (21) et l'ailette de rétention (28) pour la séparation de l'ailette de rétention (28) ;
b) l'ailette de rétention (28) s'étend sensiblement horizontalement, donc debout perpendiculairement au passage axial (20) ; et
c) sur le côté supérieur de l'ailette de rétention (28), le passage axial (20) débouchant est entouré d'un col (29) sur lequel est réalisé un renflement (290) tourné vers l'intérieur et qui peut présenter des entailles (291) pour améliorer l'élasticité du col (29).

6. Dispositif selon la revendication 4 ou 5,
**caractérisé en ce que**
a) le corps creux (21) du capuchon de transmission (2) présente au moins un perçage (210) latéral ; et
b) au moins un alésage (280) est prévu dans l'ailette de rétention (28).

7. Dispositif selon la revendication 1, **caractérisé en ce que**
a) le contour intérieur (17) non symétrique en rotation dans l'implant (1) est un polyèdre intérieur, par exemple un octogone ; ou bien le contour extérieur (101) prévu de façon alternative sur l'implant (1) est un polyèdre extérieur, par exemple un octogone ;
b) la section d'entraîneur (30) sur l'adaptateur (3) - avec le contour intérieur (17) présent dans l'implant (1) - est un polyèdre extérieur, par exemple un polygone ; ou bien
c) la section d'entraîneur (30) sur l'adaptateur (3) - avec le contour extérieur (101) éventuellement présent sur l'implant (1) - est un polyèdre intérieur (302), par exemple un polygone ; et
d) l'embase emboîtable (33) sur l'adaptateur (3) est un polyèdre extérieur.

8. Dispositif selon l'une quelconque des revendications 1, 2, 3 ou 7, **caractérisé en ce que** sur l'adaptateur (3)
a) la section de retenue (31) se raccorde à la section d'entraîneur (30) ;
b) une section intermédiaire (32) est disposée entre la section de retenue (31) et l'embase emboîtable (33) ;
c) la section intermédiaire (32) présente une première collerette (320) et une seconde collerette (323), entre lesquelles se trouve une partie (322) réduite en diamètre ; et
d) la première collerette (320) présente la rainure radiale (321) et une rainure annulaire (331) pour le logement d'une bague de retenue (332) est présente entre l'embase emboîtable (33) et la seconde collerette (323).

9. Dispositif selon l'une quelconque des revendications 1 à 8, **caractérisé en ce que**
a) le capuchon de transmission (2) présente un trou borgne (34) s'étendant axialement à partir du côté apical avec un fond d'alésage (325) délimitant vers le côté de la couronne ; et comporte
b) un disque polygonal (324) agrandi par rapport au diamètre de l'embase emboîtable (33) et de la section de retenue (31) entre l'embase emboîtable (33) et la section de retenue (31).

10. Dispositif selon la revendication 1, **caractérisé en ce que**
a) l'implant (1) se rétrécit au-dessous de l'arête d'épaulement (110) en direction de la partie de racine (12), de manière à former la contre-dépouille (13) ;
b) l'épaulement d'implant (11) présente une inclinaison de l'ordre de 30° ;
c) la partie de racine (12) est dotée d'un filetage extérieur (14), de préférence autotaraudeur ; et
d) une partie de filetage intérieur (18) peut être disposée sur l'implant (1) lorsqu'on a un contour intérieur (17) ou sur l'implant (1) lorsqu'on a un contour extérieur (101) comme alternative, à l'intérieur d'un trou borgne (16).

11. Dispositif selon la revendication 1, **caractérisé en ce que**
a) la combinaison de l'implant (1), du capuchon de transmission (2) emboîté sur l'implant (1) et de l'adaptateur (3) emboîté à travers le capuchon de transmission (2) est disposée pour l'application opérationnelle dans un récipient (4, 6) stérile de manière amovible à partir d'une position fixée ; et
b) l'embase emboîtable (33) est positionnée ici de façon accessible pour la saisie au moyen d'un instrument, généralement un instrument de vissage, avec une partie d'accouplement (7) emboîtée éventuellement auparavant sur l'embase emboîtable (33).

12. Dispositif selon la revendication 11, **caractérisé en ce que**
a) le récipient pour la combinaison (1, 2, 3) est une ampoule (4) insérable dans une capsule extérieure (5) ;
b) l'ampoule (4) présente :
ba) une enveloppe (42) extérieure ;
bb) un évidement (43) latéral de grande surface dans l'enveloppe (42), par lequel l'implant (1) maintenu dans l'ampoule (4) peut être sorti ;
bc) une partie de retenue (40) avec un creux (400) ouvert latéralement, qui est dirigé avec l'évidement (43) dans la même direction ; et
c) l'adaptateur (3) portant le capuchon de transmission (2) et l'implant (1) est encliqueté de façon amovible avec sa section intermédiaire (32) dans le creux (400), de sorte que l'implant (1) porté par l'adaptateur (3) est logé sans contact dans l'ampoule (4).

13. Dispositif selon la revendication 11, **caractérisé en ce que**
a) le récipient pour la combinaison (1, 2, 3) est un habillage transparent avec une forme de fond (6) emboutie profond ;
b) la forme de fond (6) présente une cavité (60, 61, 62) à plusieurs éléments, qui s'étend sur un large espace sur le contour extérieur du dispositif (1, 2, 3), à savoir :
ba) un évidement pour instruments (60) pour l'embase emboîtable (33), dépassant ici à l'intérieur, de l'adaptateur (3) ;
bb) un évidement pour implant (61) opposé à l'évidement pour instruments (60), dans lequel l'implant (1) dépasse avec le capuchon de transmission (2) emboîté ; et
bc) entre l'évidement pour instruments (60) et l'évidement pour implant (61) deux rainures de guidage (62) agencées en travers et alignées entre elles pour le logement avec blocage léger de l'ailette de rétention (28) du capuchon de transmission (2), de sorte que l'implant (1) soutenu par le capuchon de transmission (2) est logé sans contact dans la forme de fond (6).

14. Dispositif selon la revendication 13, **caractérisé en ce que**
a) la forme de fond (6) est recouverte avec un revêtement ; et
b) à l'intérieur de la forme de fond (6) peuvent être présentes d'autres cavités (63), par exemple pour l'intercalation d'une vis de cicatrisation.

15. Dispositif selon la revendication 1, **caractérisé en ce que**
a) le capuchon de transmission (2) se détache de l'implant (1) après l'empreinte (AD) prise, lors de l'enlèvement d'un moule d'empreinte (9), et reste dans le moule d'empreinte (9) ;
b) un implant de manipulation (8) avec une arête d'épaulement (810) analogue et une contre-dépouille (83) peut être emboîté par encliquetage dans le capuchon d'empreinte (2) resté dans le moule d'empreinte (9) ; et
c) lors de la séparation de l'empreinte (AD) remplie avec de la masse de modèle (92), il se forme un modèle maître (MM) avec l'implant de manipulation (8) noyé dedans ; et dans le cas présent le capuchon de transmission (2), de préférence à base de plastique pouvant cuire, reste à nouveau dans le moule d'empreinte (9).
